# FASCICULE DE BREVET EUROPEEN

(11) **EP 4 123 492 B1**
(45) Date de publication et mention de la délivrance du brevet: **17.12.2025**
(21) Numéro de dépôt: 22186159.4
(22) Date de dépôt: 21.07.2022
(51) Int. Cl.: G06F 21/62

(54) **MISE EN PARTAGE D'UNE FONCTION D'UNE APPLICATION DÉFINIE EN LANGAGE ORIENTÉ OBJET**
GEMEINSAME NUTZUNG EINER FUNKTION EINER ANWENSDUNG, DIE IN EINER OBJEKTORIENTIERTEN SPRACHE DEFINIERT IST
SHARING OF A FUNCTION OF AN APPLICATION DEFINED IN OBJECT ORIENTED LANGUAGE

(30) Priorité: 22.07.2021 FR 2107937
(43) Date de publication de la demande: 25.01.2023
(73) Titulaire: IDEMIA France, 92400 Courbevoie (FR)
(72) Inventeur: DEL GIUDICE, Lauren, 92400 COURBEVOIE (FR); DUCLOS, Rémi, 92400 COURBEVOIE (FR)
(74) Mandataire: Idemia

(56) Documents cités:
- US-A1- 2010 023 951
- US-B1- 7 836 456

## Description

### Domaine Technique

L'invention se rapporte au domaine de la mise en partage de fonctions mises en œuvre dans une application interprétée en langage objet et concerne en particulier l'accès d'une application cliente à une fonction d'une telle application fermée, par exemple dans un environnement Java Card.

Il est connu d'exécuter des applications (ou applets) compilées dans un code interprétable orienté objet dans des dispositifs électroniques. Des applications interprétées en langage objet peuvent par exemple être exécutées dans une architecture comportant un élément sécurisé (ES) qui est intégré ou embarqué dans un dispositif électronique hôte, tel qu'un SOC (pour « System on Chip »). Pour ce faire, l'élément sécurisé peut comporter une mémoire volatile interne apte à charger le code exécutable et les données d'une application interprétée en langage objet. Un tel élément sécurisé peut être, par exemple, un modem ou une carte mère, ou plus généralement, une unité de traitement indépendante configurée pour coopérer de façon sécurisée avec un dispositif électronique hôte, dans lequel est intégré ou embarqué l'élément sécurisé.

Dans un environnement Java Card, il est connu de permettre à une première application de mettre en partage (mettre en commun) au moins l'une de ses fonctions (ou méthodes) de sorte qu'une autre application, dite application cliente, puisse y accéder. Pour ce faire, la première application doit mettre en œuvre une interface de partage (dite « shareable interface » ou « shareable interface objet » (SIO) en anglais) conforme au standard Java Card. L'application cliente peut ainsi appeler la fonction mise en partage via l'interface de partage de la première application.

Cependant, une application de type Java Card ne dispose pas nécessairement d'une interface de partage. Un problème se pose en particulier lorsqu'une telle première application est une application fermée, c'est-à-dire qu'il n'est pas possible de modifier son code source, et que cette application fermée n'implémente pas d'interface de partage. Il n'est alors pas possible d'ajouter une interface de partage dans l'application fermée, ce qui rend difficile voire impossible la mise en partage d'une fonction de l'application fermée vers une autre application cliente.

Le problème ci-dessus se complexifie encore lorsque les aspects sécuritaires sont critiques. Il peut en effet être nécessaire de permettre le partage d'une fonction d'une application fermée sans introduire de vulnérabilité sécuritaire.

Ainsi, il existe aujourd'hui un besoin pour permettre la mise en partage de fonctions entre applications (ou applets) interprétées en langage objet, en particulier dans un environnement Java Card, sans introduire de vulnérabilité ou faille sécuritaire. En particulier, il n'existe pas de solution satisfaisante pour permettre le partage sécurisé d'une fonction d'une application fermée dépourvue d'une interface de partage (par exemple une application fermée Java Card), afin de permettre l'accès de ladite fonction à une application cliente.

US2010/023951 décrit une méthode de transfert de la propriété d'un objet d'une première application s'exécutant dans un premier contexte d'exécution vers une deuxième application s'exécutant dans un deuxième contexte d'exécution, les deux contextes étant isolés par un pare-feu. US 7 836 456 décrit une carte à puce dans laquelle des applications s'exécutant dans différents contextes d'exécution sont autorisées à communiquer entre elles à travers des objets à interface partageable (« Shareable Interface Object » selon la terminologie anglo-saxonne).

### Objet et résumé de l'invention

A cet effet, la présente invention concerne un procédé de mise en partage, mis en œuvre dans un premier dispositif électronique comprenant une première application, dite application fermée, de type Java Card et un système d'exploitation apte à exécuter l'application fermée, le système d'exploitation comprenant un module de partage, le procédé comprenant les étapes suivantes réalisées par le module de partage :
- analyse du code interprétable orienté objet, de l'application fermée, en cours d'exécution par le système d'exploitation, ladite analyse comprenant détection de l'instanciation par le système d'exploitation d'un premier objet correspondant à un type d'objet prédéfini ;
- détermination d'une référence d'objet pointant vers ledit premier objet ;
- génération d'un nouvel objet dit objet de partage dans le contexte de l'application fermée, ledit objet de partage comprenant au moins une fonction partagée et comprenant un champ dans lequel est insérée ladite référence d'objet ;
- enregistrement (S20) de l'objet de partage auprès du système d'exploitation dans une arborescence d'objets formée par le système d'exploitation en réponse au code interprétable ; et
- exécution de l'objet de partage causant l'implémentation d'une interface de partage de sorte à fournir l'accès d'au moins une dite fonction partagée à une deuxième application, dite application cliente, de type Java Card se trouvant dans un contexte autre que l'application fermée.

La présente invention permet de partager de façon fiable et sécurisée, avec une application cliente, des fonctions (ou méthodes) d'une application Java Card, ou plus généralement d'une quelconque application (ou applet) cible définie en langage interprété orienté objet. Une application cliente située hors du contexte de l'application fermée bénéficie ainsi d'un accès limité et sécurisé à une ou des fonctions de l'application fermée, selon les droits d'accès définis dans l'objet de partage.

Ce partage de fonction est possible sans induire de vulnérabilité dans le code de l'application fermée. Une application malveillante (malware ou autre) ne pourra ainsi avoir qu'un accès très limité aux fonctions de l'application fermée, ce qui permet de limiter les risques de sécurité. Dans l'exemple décrit ci-avant, une application cliente ne peut appeler que la fonction autorisée en partage par l'objet de partage.

Selon un mode de réalisation particulier, le procédé comprend, avant l'analyse du code interprétable orienté objet :
- détermination d'au moins un type d'objet prédéfini ; et
- enregistrement dudit au moins un type d'objet prédéfini dans une mémoire du premier dispositif électronique ;
dans lequel ladite analyse comprend:
- analyse du code interprétable orienté objet de l'application fermée en cours d'exécution pour déterminer, pour chaque objet instancié par le système d'exploitation, si ledit objet instancié correspond à un dit type d'objet prédéfini.

Selon un mode de réalisation particulier, l'analyse comprend :
- détection de portions de code interprétable orienté objet de l'application fermée, exécutées par le système d'exploitation, causant l'instanciation d'un nouvel objet ;
- détermination, à partir d'opérandes définis dans lesdites portions de code, du type de chaque nouvel objet instancié par le système d'exploitation ; et
- détermination de savoir si le type de chaque nouvel objet instancié correspond à un type d'objet prédéfini.

Selon un mode de réalisation particulier, la détermination d'une référence d'objet pointant vers ledit au moins un premier objet comprend :
- identification d'une référence d'objet empilée dans une pile d'exécution par le système d'exploitation au cours de l'exécution du code interprétable de l'application fermée, ladite référence d'objet pointant vers ledit premier objet détecté lors de l'analyse ; et
- duplication de ladite référence d'objet en vue de l'insérer dans ledit champ de l'objet de partage.

Selon un mode de réalisation particulier, l'objet de partage généré par le module de partage n'est pas défini dans le code interprétable de l'application fermée.

Selon un mode de réalisation particulier, ladite génération de l'objet de partage comprend :
- génération au cours de laquelle l'objet de partage est généré dans le contexte de l'application fermée ; et
- injection au cours de laquelle la référence d'objet pointant vers ledit premier objet est enregistrée dans ledit champ de l'objet de partage.

Selon un mode de réalisation particulier, ledit enregistrement comprend :
- enregistrement de l'objet de partage dans une liste d'objet qui est pointée directement ou indirectement par une racine de persistance.

Selon un mode de réalisation particulier, ladite exécution comprend :
- contrôle de l'accès, au travers d'un firewall Java Card entre le contexte de l'application fermée et le contexte de l'application cliente, de sorte à ne partager une fonction appelée par l'application cliente que si ladite fonction appelée est définie en tant que fonction partagée dans l'objet de partage.

Selon un mode de réalisation particulier, ladite exécution comprend :
- détection qu'un objet client instancié par l'application cliente appelle au moins une fonction du premier objet au travers du firewall Java Card ;
- détermination de savoir si ladite au moins une fonction appelée correspond à au moins une dite fonction partagée telle que définie par l'objet de partage ; et
- dans l'affirmative, autorisation de l'accès de l'objet client, au travers du firewall Java Card, à ladite au moins une fonction appelée.

Selon un mode de réalisation particulier, l'application cliente est comprise dans le premier dispositif électronique, ou dans lequel l'application cliente est comprise dans un deuxième dispositif électronique (distinct du premier dispositif) avec lequel coopère le premier dispositif électronique.

En conséquence, l'invention vise aussi un programme d'ordinateur sur un support d'informations, ce programme étant susceptible d'être mis en œuvre dans un dispositif électronique tel qu'une carte à puce ou un ordinateur, ce programme comportant des instructions adaptées à la mise en œuvre des étapes d'un procédé de mise en partage tel que défini ci-dessus et décrit ci-après dans des modes de réalisation particuliers.

L'invention vise aussi un support d'enregistrement (ou support d'informations) lisible par un ordinateur, et comportant des instructions d'un programme d'ordinateur tel que mentionné ci-dessus et décrit ci-après.

L'invention concerne également un procédé de traitement, mis en œuvre dans un système comprenant :
- un premier dispositif électronique comprenant une première application, dite application fermée, de type Java Card et un premier système d'exploitation apte à exécuter l'application fermée, le système d'exploitation comprenant un module de partage ; et
- un deuxième dispositif électronique comprenant une deuxième application, dite application cliente, de type Java Card et un deuxième système d'exploitation apte à exécuter l'application cliente ;
le procédé comprenant :
- exécution par le premier système d'exploitation de l'application fermée ; et
- exécution, par le module de partage du premier système d'exploitation, d'un procédé de mise en partage tel que défini dans ce document ;
le procédé comprenant en outre les étapes suivantes réalisées par le deuxième système d'exploitation :
- exécution de l'application cliente, dans un contexte autre que l'application fermée, au cours de laquelle un objet dit objet client est instancié ;
- détermination d'une deuxième référence d'objet pointant vers l'objet de partage ;
- insertion de la deuxième référence d'objet dans un champ dudit objet client ; et
- appel, par ledit objet client, d'une fonction du premier objet auprès de l'objet de partage implémentant une interface de partage au travers d'un pare-feu Java Card, ledit objet client n'obtenant l'accès à ladite fonction appelée que si ladite fonction appelée est définie en tant que fonction partagée dans l'objet de partage.

Selon un mode de réalisation particulier, les premier et deuxième dispositifs électroniques sont des dispositifs distincts, ou
dans lequel les premier et deuxième dispositifs électroniques forment un seul et même dispositif de sorte que les premier et deuxième systèmes d'exploitation forment un seul et même système d'exploitation.

Selon un mode de réalisation particulier, le procédé de traitement comprend, avant l'exécution de l'application fermée par le premier système d'exploitation du premier dispositif électronique :
- chargement dans une mémoire du deuxième dispositif électronique d'une librairie JavaCard comprenant des informations de classe définissant la classe de l'objet de partage ;
- dans lequel le deuxième système d'exploitation détermine la référence d'objet pointant vers l'objet de partage à partir des informations de classe.

En conséquence, l'invention vise aussi un programme d'ordinateur sur un support d'informations, ce programme étant susceptible d'être mis en œuvre dans un dispositif électronique ou système, ou dans un ordinateur, ce programme comportant des instructions adaptées à la mise en œuvre des étapes d'un procédé de traitement tel que défini ci-dessus et décrit ci-après dans des modes de réalisation particuliers.

L'invention vise aussi un support d'enregistrement (ou support d'informations) lisible par un ordinateur, et comportant des instructions d'un programme d'ordinateur tel que mentionné ci-dessus et décrit ci-après.

A noter que les programmes d'ordinateur mentionnés dans le présent document peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention vise également un premier dispositif électronique configuré pour mettre en œuvre un procédé de mise en partage tel que défini dans ce document. En particulier, l'invention vise un premier dispositif électronique comprenant une première application, dite application fermée, de type Java Card et un système d'exploitation apte à exécuter l'application fermée, le système d'exploitation comprenant un module de partage,
le module de partage comprenant :
- un module d'analyse configuré pour réaliser une analyse du code interprétable orienté objet, de l'application fermée, en cours d'exécution par le système d'exploitation ;
- le module d'analyse étant configuré pour détecter, au cours de ladite analyse, l'instanciation par le système d'exploitation d'un premier objet conforme à un type d'objet prédéfini ;
- un module de détermination configuré pour déterminer une référence d'objet pointant vers ledit premier objet ;
- un module de génération configuré pour générer un nouvel objet dit objet de partage dans le contexte de l'application fermée, ledit objet de partage comprenant au moins une fonction partagée et comprenant un champ dans lequel est insérée ladite référence d'objet ;
- un module d'enregistrement configuré pour enregistrer l'objet de partage auprès du système d'exploitation dans une arborescence d'objets formée par le système d'exploitation en réponse au code interprétable ; et
- un module d'exécution configuré pour exécuter l'objet de partage causant l'implémentation d'une interface de partage de sorte à fournir l'accès d'au moins une dite fonction partagée à une deuxième application, dite application cliente, de type Java Card se trouvant dans un contexte autre que l'application fermée.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. De la même manière, un composant matériel correspond à tout élément d'un ensemble matériel (ou hardware) apte à mettre en œuvre une fonction ou un ensemble de fonctions, selon ce qui est décrit ci-dessous pour le module concerné.

A noter que les différents modes de réalisation mentionnés ci-avant en relation avec le procédé de mise en partage de l'invention ainsi que les avantages associés s'appliquent de façon analogue au premier dispositif électronique de l'invention.

Pour chaque étape du procédé de mise en partage de l'invention décrite dans ce document, le premier dispositif électronique au sens de l'invention peut comprendre un module correspondant configuré pour réaliser ladite étape.

L'invention concerne également un système configuré pour mettre en œuvre un procédé de traitement tel que défini dans ce document. En particulier, l'invention vise un système comprenant un premier dispositif électronique et un deuxième dispositif électronique comme définis dans ce document, ces deux dispositifs étant configurés pour coopérer ensemble pour mettre en œuvre un procédé de mise en partage conforme à l'invention.

En particulier, l'invention vise un système comprenant :
- un premier dispositif électronique comme défini ci-avant et décrit ci-après dans des exemples particuliers ; et
- un deuxième dispositif électronique comprenant une deuxième application, dite application cliente, de type Java Card et un deuxième système d'exploitation apte à exécuter l'application cliente ;
   dans lequel le premier système d'exploitation est configuré pour exécuter l'application fermée,
   dans lequel le deuxième système d'exploitation comprend :
- un module d'exécution configuré pour exécuter l'application cliente, dans un contexte autre que l'application fermée, de sorte à instancier un objet dit objet client au cours de l'exécution de l'application cliente ;
- un module de détermination configuré pour déterminer une deuxième référence d'objet pointant vers l'objet de partage ;
- un module d'insertion configuré pour insérer la deuxième référence d'objet dans un champ dudit objet client ; et
- un module d'appel configuré pour que ledit objet client appelle une fonction du premier objet auprès de l'objet de partage implémentant une interface de partage au travers d'un pare-feu Java Card, ledit objet client n'obtenant l'accès à ladite fonction appelée que si ladite fonction appelée est définie en tant que fonction partagée dans l'objet de partage

A noter que les différents modes de réalisation mentionnés ci-avant en relation avec le procédé de traitement de l'invention ainsi que les avantages associés s'appliquent de façon analogue au système de l'invention.

Pour chaque étape du procédé de traitement de l'invention décrit dans ce document, le système au sens de l'invention peut comprendre un module correspondant configuré pour réaliser ladite étape.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] la figure 1 représente schématiquement un dispositif électronique (ou système) selon un mode de réalisation particulier de l'invention ;
[Fig. 2] la figure 2 représente schématiquement un système comprenant un premier dispositif électronique et un deuxième dispositif électronique, selon un mode de réalisation particulier de l'invention ;
[Fig. 3] la figure 3 représente schématiquement des modules fonctionnels mis en œuvre par un dispositif électronique selon un mode de réalisation particulier de l'invention ;
[Fig. 4] la figure 4 représente, sous forme d'un diagramme, les étapes d'un procédé de mise en partage conforme à un mode de réalisation particulier de l'invention ;
[Fig. 5] la figure 5 représente un diagramme d'objet illustrant le déroulement d'une mise en partage particulière selon un mode de réalisation particulier de l'invention; et
[Fig. 6] la figure 6 représente, sous forme d'un diagramme, les étapes d'un procédé de mise en partage et d'un procédé de traitement conformes à un mode de réalisation particulier de l'invention.

### Description détaillée de plusieurs modes de réalisation

Comme indiqué précédemment, l'invention vise à mettre en partage une ou des fonctions implémentées par une application fermée, de sorte à en permettre l'accès par une autre application dite application cliente. La présente invention s'applique de manière générale à la mise en partage d'au moins une fonction d'une application (ou applet) définie dans un langage (ou code) interprétable orienté objet.

Dans la suite de ce document, l'invention est décrite dans le contexte d'applications (ou applets) de type Java Card (ou plus généralement de type Java). Toutefois, l'invention ne se limite pas à ce cas particulier et s'applique plus généralement à un mécanisme de mise en partage inter-applet, c'est-à-dire entre des applications (ou applets) définies dans un quelconque langage interprétable orienté objet.

La plateforme (ou le standard) Java Card, et les différents éléments qui la constituent sont définis dans la norme « Java Card 3 Platform Runtime Environment Specification » ou dans toute autre version ultérieure applicable.

Comme bien connu de l'homme du métier, un objet dans le contexte d'un langage interprété orienté objet constitue une instance d'une classe du langage en question. De plus, une classe est un descripteur programmatique regroupant un ensemble d'attributs et de méthodes dans le langage considéré. Comme décrit par la suite, un objet peut être de différente nature et est susceptible de comprendre au moins une référence pointant vers un autre objet (bien que cela ne soit pas nécessairement le cas).

Aujourd'hui, divers types de langages interprétés orientés objet peuvent être compilés en « bytecode » (code intermédiaire exécutable, dit aussi code octal) avant d'être exécutés par un interpréteur (ou compilé par un compilateur). Ainsi, une application Java Card est habituellement transmise sous forme de bytecode à un dispositif cible tel qu'un élément sécurisé comme évoqué ci-avant. Cet élément sécurisé réalise une compilation ou interprétation, éventuellement à la volée, pour traduire le bytecode en code machine avant exécution. Pour ce faire, l'élément sécurisé met en œuvre un logiciel spécifique appelé « machine virtuelle », bien connu de l'homme du métier.

Java Card est un système d'exploitation bien connu pour carte à puce qui fournit notamment un environnement d'exécution pour un sous-ensemble du langage Java spécifiquement destiné aux applications (ou applets) pour cartes à puce. Java Card permet l'exécution sécurisée, par exemple au sein d'une carte à puce ou support équivalent, d'applications définies dans le langage de programmation Java. Pour ce faire, une carte à puce embarquant un environnement d'exécution Java Card (appelé JCRE pour « Java Card Runtime Environment ») implémente notamment une machine virtuelle (dite JCVM pour « Java Card Virtual Machine ») permettant l'exécution du bytecode d'applications Java Card. Les applications Java Card sont traitées comme des applets.

De façon bien connue, l'environnement d'exécution JCRE assure notamment l'isolement de contexte et d'application. Les contextes Java Card, bien connus de l'homme du métier, permettent d'isoler des applications entre elles pour éviter des failles sécuritaires. Chaque contexte d'application peut être isolé par un système d'exploitation au moyen d'un pare-feu (firewall) au sens de Java Card. Grâce à l'isolement de contexte, les objets créés, donc en possession d'applications fonctionnant dans un même contexte, ne peuvent pas être accédés par des quelconques autres applications d'un autre contexte à moins que les applications possédant ces objets ne fournissent explicitement des interfaces pour l'accès. De telles interfaces sont appelées des interfaces de partage. En outre, les objets implémentant ces interfaces, qui sont appelés objets d'interface, constituent des points d'entrée légaux à ces applications.

Dans le présent exposé, une application fermée désigne une application dont il n'est pas possible de modifier le code source (par exemple pour des raisons sécuritaires), comme décrit plus en détail ultérieurement.

Comme déjà indiqué, la mise en partage de fonctions d'une application fermée pour en permettre l'accès par une application cliente pose problème, en particulier lorsque l'application fermée ne dispose pas d'une interface de partage, telle qu'une interface SIO (pour « Shareable Interface Object »), conforme au standard Java Card, pour permettre un tel partage de fonction avec une application cliente.

A cet effet, l'invention, selon différents modes de réalisation, vise notamment un procédé de mise en partage mis en œuvre dans un premier dispositif électronique comprenant une application fermée de type Java Card et un système d'exploitation apte à exécuter l'application fermée. Le système d'exploitation comprend un module de partage configuré pour : analyser du code interprétable orienté objet (ou bytecode), de l'application fermée, en cours d'exécution par le système d'exploitation de sorte à détecter l'instanciation par le système d'exploitation d'un premier objet correspondant à un type d'objet prédéfini ; déterminer une référence d'objet pointant vers ce premier objet ; générer un nouvel objet dit objet de partage dans le contexte de l'application fermée, cet objet de partage comprenant au moins une fonction (ou méthode) partagée et comprenant un champ dans lequel est inséré la référence d'objet ; et enregistrer l'objet de partage auprès du système d'exploitation comme étant relié directement ou indirectement à une racine de persistance d'une arborescence d'objets formée par le système d'exploitation en réponse au code interprétable. Le module de partage peut ensuite exécuter l'objet de partage causant l'implémentation d'une interface de partage de sorte à fournir l'accès d'au moins une dite fonction partagée à une deuxième application, dite application cliente, de type Java Card se trouvant dans un contexte autre que l'application fermée.

L'invention vise également le premier dispositif électronique (une carte à puce par exemple), un système comprenant les premier et deuxième dispositifs électroniques, ainsi qu'un programme d'ordinateur pour l'exécution du procédé de mise en partage de l'invention et un support d'enregistrement comportant un tel programme d'ordinateur.

D'autres aspects et avantages de la présente invention ressortiront des exemples de réalisation décrits ci-dessous en référence aux dessins mentionnés ci-avant.

Dans ce document, des exemples de mise en œuvre de l'invention sont décrits dans le contexte d'une carte à puce embarquant un environnement d'exécution Java Card (JCRE). Toutefois, l'invention ne s'applique pas de manière exclusive aux cartes à puce mais vise de manière plus générale la mise en partage d'une fonction d'une application fermée implémentée dans un premier dispositif électronique quelconque, tel qu'une carte à puce ou un terminal de communication par exemple. Alternativement, l'invention peut s'appliquer dans divers architectures ou systèmes dans lesquels du code interprétable orienté objet est exécuté. L'invention peut être mise en œuvre dans une carte à puce, dans un terminal de communication ou dans tout autre dispositif ou système approprié comportant une mémoire volatile et une mémoire non volatile.

Selon un exemple particulier, l'invention s'applique dans un élément sécurisé (ES) coopérant avec un dispositif électronique hôte, tel qu'un SOC (pour « System on Chip ») par exemple, dans lequel l'élément sécurisé est embarqué ou intégré. Cet élément sécurisé est par exemple embarqué dans une carte à puce présentant une architecture SE/SOC. Des mises en œuvre de l'invention sont toutefois possibles dans d'autres environnements. Un tel élément sécurisé peut être, par exemple, un modem ou une carte mère, ou plus généralement, une unité de traitement indépendante configurée pour coopérer de façon sécurisée avec un dispositif électronique hôte, dans lequel est intégré ou embarqué l'élément sécurisé.

Comme défini par l'organisme de standardisation « GlobalPlatform » bien connu de l'homme du métier, un élément sécurisé (pour « secure element » en anglais) désigne dans ce document une plateforme matérielle et logicielle configurée pour héberger de façon sécurisée des applications et leurs données sensibles associées (clés cryptographiques, algorithmes...), en conformité avec des règles fixées par une autorité tierce de confiance. Un élément sécurisé fournit un environnement d'exécution sécurisé à des applications. Il peut prendre diverses formes, telles qu'un module UICC (pour « Universal Integrated Circuit Card »), un élément sécurisé embarqué (ou « embedded SE » ou encore « eSIM » pour « embedded Subscriber Identity Module ») en tant qu'élément discret ou intégré, ou encore une carte microSD. Un module UICC et une carte microSD sont généralement amovibles. Chaque forme d'élément sécurisé est destinée à être utilisée dans des applications bien particulières et doit répondre à des exigences propres au marché concerné.

Un élément sécurisé peut par exemple être utilisé en téléphonie mobile pour authentifier l'utilisateur d'un terminal de communication auprès d'un réseau mobile auquel il est abonné, ou encore pour mettre en œuvre une application de paiement dans le domaine bancaire.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

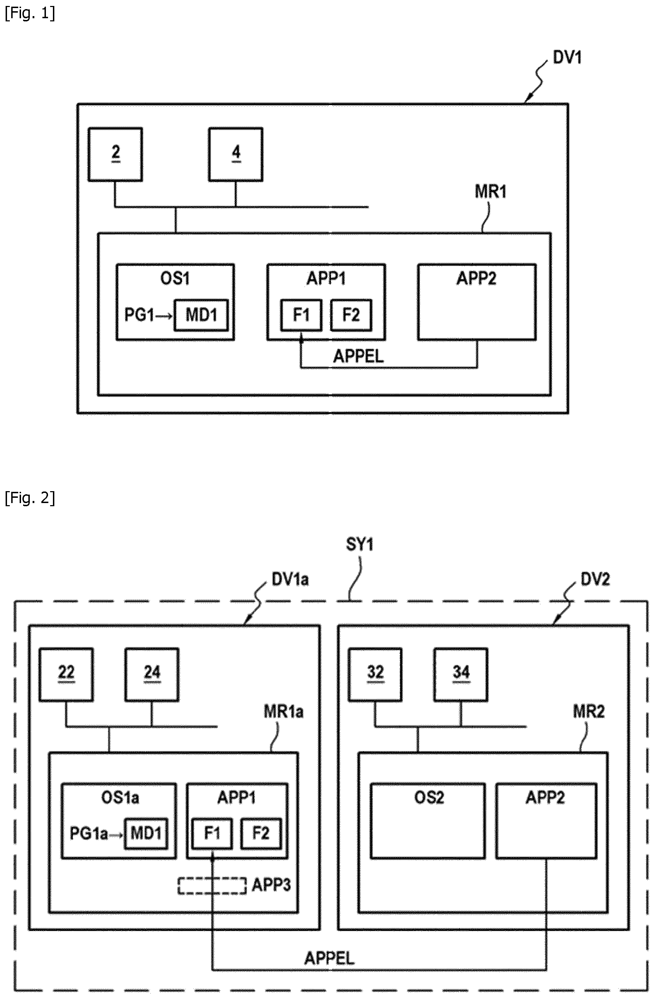

La **figure 1** représente un premier dispositif électronique DV1 mettant en œuvre l'invention selon un mode de réalisation particulier. Le dispositif électronique DV1 est notamment configuré pour mettre en œuvre un procédé de mise en partage comme décrit ci-après.

Le dispositif DV1 est par exemple une carte à puce ou un terminal de communications. Le dispositif DV1 comprend dans cet exemple un processeur 2, une mémoire volatile 4 (RAM) et une mémoire non volatile MR1.

La mémoire non volatile MR1 constitue un support d'enregistrement (ou support d'informations) conforme à un mode de réalisation particulier, lisible par le processeur 2, et sur lequel est enregistré un système d'exploitation OS1 comprenant un module de partage MD1 conforme à un mode de réalisation particulier de l'invention. La mémoire MR1 est par exemple une mémoire non volatile réinscriptible (de type Flash, EEPROM ou autre). Le module de partage MD1 est implémenté à partir d'un programme d'ordinateur (ou code d'instructions) PG1 compris dans le système d'exploitation OS1.

Le module de partage MD1 est configuré pour mettre en partage la fonction F1 de l'application fermée APP1 (malgré l'absence d'objet de partage SIO dans l'application APP1). Plus particulièrement, le programme d'ordinateur PG1 comporte des instructions pour l'exécution des étapes d'un procédé de mise en partage qui est décrit ultérieurement selon des modes de réalisation particuliers.

Le système d'exploitation OS1 comprend un environnement d'exécution JCRE pour exécuter des applications Java Card au sein du dispositif DV1. On suppose dans cet exemple que deux applications (ou applets) Java Card, notées APP1 et APP2, sont chargées dans la mémoire non volatile MR1. Ces applications APP1 et APP2 comprennent du code exécutable (ou code interprétable orienté objet) appelé aussi bytecode, et éventuellement des données associées. Le système d'exploitation OS1 implémente ainsi une machine virtuelle JCVM apte à exécuter les applications APP1 et APP2, et en particulier les fonctions (ou méthodes) F1 et F2 de l'application fermée APP1. Dans l'exemple considéré ici, le bytecode des applications APP1 et APP2 est codé dans le langage Java Card. A noter toutefois que le nombre des applications chargées dans le dispositif DV1, ou encore le nombre de fonctions exécutables par ces applications, ainsi que la nature des applications et fonctions mises en jeu, peuvent être adaptés par l'homme du métier selon le cas.

On considère dans cet exemple que la première application APP1 est une application fermée dans la mesure où l'entité ou programmeur en charge d'implémenter le système d'exploitation OS1 ne peut pas modifier librement son code source, en raison par exemple d'un frein technique (par exemple à cause d'un mécanisme de sécurité implémenté par le système d'exploitation OS1) ou d'un obstacle autre, notamment car il n'a pas accès au code source (par exemple, par défaut de droits d'accès). APP1 est par exemple une application sensible installée dans un élément sécurisé du dispositif DV1. Cette application APP1 comprend deux fonctions F1 et F2 qu'elle peut implémenter sous contrôle du système d'exploitation OS1. A titre d'exemple non limitatif, l'application APP1 est une application bancaire implémentant des fonctions sécuritaires F1 et F2. Les fonctions F1 et F2 sont par exemple associées à l'authentification par un code PIN d'un utilisateur de l'application APP1. D'autres exemples sont toutefois possibles.

On suppose par ailleurs dans le cas présent que l'application fermée APP1 ne comprend pas d'interface de partage, permettant la mise en partage d'une quelconque fonction de l'application fermée F1 auprès d'une application tierce telle que l'application APP2. En particulier, l'application fermée APP1 est dépourvue d'objet d'interface SIO (pour « Shareable Interface Object ») selon le standard Java Card. Aussi, il n'est pas possible de mettre en partage les fonctions F1 et F2 de l'application fermée APP1 selon une solution conventionnelle impliquant un objet de partage SIO. A noter toutefois que l'invention peut également être mise en œuvre dans un cas où l'application fermée APP1 comprend un objet de partage SIO.

On suppose que la deuxième application APP2 est une application cliente dans la mesure où elle nécessite d'appeler, ou d'accéder à, une fonction de l'application fermée APP1, à savoir la fonction F1 dans cet exemple (cet appel ou accès étant symbolisé par la référence APPEL sur la **figure 1**). L'application cliente APP2 se trouve dans un contexte (au sens Java Card) différent du contexte de l'application fermée APP1, pour assurer la sécurité de l'application fermée APP1.

Au cours de l'exécution des applications APP1 et APP2 par le système d'exploitation OS1, des objets sont susceptibles d'être instanciés. Ces objets, constituant l'instanciation d'une classe du langage interprété Java Card, peuvent être enregistrés par exemple dans la mémoire volatile 4 du dispositif DV1, ou encore dans sa mémoire non volatile MR1.

Dans l'exemple représenté en **figure 1****,** les applications APP1 et APP2 sont donc implémentées par le même système d'exploitation OS1 au sein d'un même dispositif DV1. Le dispositif DV1 constitue en soi un système de partage (ou « système ») au sens de l'invention.

La **figure 2** représente une variante de réalisation de la **figure 1****.** Les éléments décrits ci-avant en référence à la **figure 1** s'applique par analogie à la variante de la **figure 2****,** cette variante différant en ce que les applications APP1 et APP2 sont implémentées par deux systèmes d'exploitation respectifs notés OS1a et OS2 dans des dispositifs électroniques distincts DV1a et DV2. Les dispositifs DV1a et DV2 sont aptes à coopérer ensemble et forment collectivement un système de partage (ou « système ») au sens de l'invention, noté SY1. Le premier dispositif DV1a comprend ainsi un processeur 22, une mémoire volatile 24 et une mémoire non volatile MR1a.

La mémoire non volatile MR1a constitue un support d'enregistrement (ou support d'informations) conforme à un mode de réalisation particulier, lisible par le processeur 22, et sur lequel est enregistré le système d'exploitation OS1a comprenant un module de partage MD1 conforme à un mode de réalisation particulier de l'invention. La mémoire MR1a est par exemple une mémoire non volatile réinscriptible (de type Flash, EEPROM ou autre). Le module de partage MD1 est implémenté à partir d'un programme d'ordinateur (ou code d'instructions) PG1a compris dans le système d'exploitation OS1a.

Le module de partage MD1 est configuré pour mettre en partage la fonction F1 de l'application fermée APP1 (malgré l'absence d'objet de partage SIO dans l'application APP1). Plus particulièrement, le programme d'ordinateur PG1a comporte des instructions pour l'exécution des étapes d'un procédé de mise en partage selon un mode de réalisation particulier de l'invention.

Le système d'exploitation OS1a du dispositif DV1a est analogue au système d'exploitation OS1 du dispositif DV1 illustré en **figure 1** à la différence qu'il ne contrôle que l'application fermée APP1, l'application cliente APP2 étant implémentée dans le deuxième dispositif DV2 sous le contrôle du deuxième système d'exploitation OS2. On suppose que les applications APP1 et APP2 considérées ici sont comme déjà décrites en référence à la **figure 1****.**

On considère dans le présent document que l'application fermée APP1 et l'application client APP2 sont des applications Java Card. L'application APP1 comprend deux fonctions (ou méthodes) F1 et F2 qu'elle peut implémenter sous contrôle du système d'exploitation OS1a. A titre d'exemple non limitatif, l'application fermée APP1 est une application bancaire implémentant des fonctions sécuritaires F1 et F2. Les fonctions F1 et F2 sont par exemple associées à l'authentification par un code PIN d'un utilisateur de l'application APP1. D'autres exemples sont toutefois possibles. L'homme du métier pourra en particulier adapter le nombre et la nature des fonctions implémentées.

On suppose en outre que l'application fermée APP1 ne comprend pas d'interface de partage, et est en particulier dépourvue d'objet d'interface SIO selon le standard Java Card, bien que la présence d'un objet d'interface SIO soit aussi possible.

De façon analogue à la **figure 1****,** le système d'exploitation OS1a illustré en **figure 2** comprend un environnement d'exécution JCRE pour exécuter des applications Java Card au sein du dispositif DV1a. Le système d'exploitation OS1a implémente ainsi une machine virtuelle JCVM apte à exécuter l'application fermée APP1, et en particulier les fonctions F1 et F2 de l'application fermée APP1.

De même, le deuxième dispositif DV2 comprend un processeur 32, une mémoire volatile 34 et une mémoire non volatile MR2. La mémoire non volatile MR2 constitue un support d'enregistrement (ou support d'informations) conforme à un mode de réalisation particulier, lisible par le processeur 32, et sur lequel est enregistré le système d'exploitation OS2 configuré pour exécuter l'application cliente APP2. La mémoire MR2 est par exemple une mémoire non volatile réinscriptible (de type Flash, EEPROM ou autre).

La deuxième application APP2 est une application cliente dans la mesure où elle nécessite d'appeler, ou d'accéder à (symbolisé par la référence APPEL sur la **figure 2**), une fonction de l'application fermée APP1, à savoir la fonction F1 dans cet exemple. L'application cliente APP2 se trouve dans un contexte (au sens Java Card) différent du contexte de l'application fermée APP1, pour assurer la sécurité de l'application fermée APP1.

Au cours de l'exécution des applications APP1 et APP2 par respectivement les systèmes d'exploitation OS1a et OS2, des objets sont susceptibles d'être instanciés. Ces objets, constituant l'instanciation d'une classe du langage interprété Java Card, peuvent par exemple être enregistrés respectivement dans les mémoires volatiles 24 et 34 des dispositifs DV1a et DV2, ou encore dans leurs mémoires non volatiles MR1a et MR2.

La présente invention permet de mettre en partage la fonction F1 de l'application fermée APP1 de sorte que l'application cliente APP2 puisse appeler cette fonction F1 sans qu'il soit nécessaire qu'une interface de partage soit prévue dans le bytecode de l'application fermée APP1. Dans le mode de réalisation de la **figure 2****,** le premier système d'exploitation OS1a peut en outre être configuré pour implémenter une troisième application Java Card APP3 jouant le rôle de proxy pour faire l'interface entre l'application fermée APP1 et l'application cliente APP2.

Les dispositifs DV1a et DV2 peuvent être distants l'un de l'autre et aptes à communiquer via des moyens de communication appropriés.

Selon une variante, le premier dispositif DV1a est compris dans le deuxième dispositif DV2. Le premier dispositif DV1a constitue par exemple un élément sécurisé coopérant avec le deuxième dispositif DV2 (par exemple selon une architecture SE/SOC comme déjà décrite ci-avant). Cet élément sécurisé peut prendre l'une des formes déjà décrites ci-avant en référence à la **figure 1****.** Selon un exemple particulier, le deuxième dispositif DV2 est une carte à puce ou un terminal de communications, qui comprend le premier dispositif DV1a en tant qu'élément de sécurité.

Selon une variante, les systèmes d'exploitation OS1a et OS2 sont compris dans un même dispositif électronique. Les systèmes d'exploitation OS1a et OS2 peuvent ainsi exécuter respectivement les applications APP1 et APP2.

Le mode de réalisation de la **figure 1** constitue un cas particulier du système SY1 de la **figure 2** dans lequel les dispositifs DV1a et DV2 forment un seul et même dispositif et dans lequel les systèmes d'exploitation OS1 et OS2 forment un seul et même système d'exploitation.

A noter que certains éléments généralement présents dans des dispositifs électroniques mettant en œuvre du code interprété orienté objet (cartes à puce ou terminaux de communication par exemple) ont été volontairement omis dans les modes de réalisation décrits ci-dessus en référence aux **figures 1** et **2** car ils ne sont pas nécessaires à la compréhension de la présente invention.

Le dispositif DV1 représenté en **figure 1** et le système SY1 représenté en **figue 2** ne constituent que des exemples de réalisation non limitatifs, d'autres mises en œuvre étant possibles dans le cadre de l'invention. L'homme du métier comprend en particulier que certains éléments du dispositif DV1 et du système SY1 notamment ne sont décrits ici que pour faciliter la compréhension de l'invention, ces éléments n'étant pas obligatoires pour mettre en œuvre l'invention.

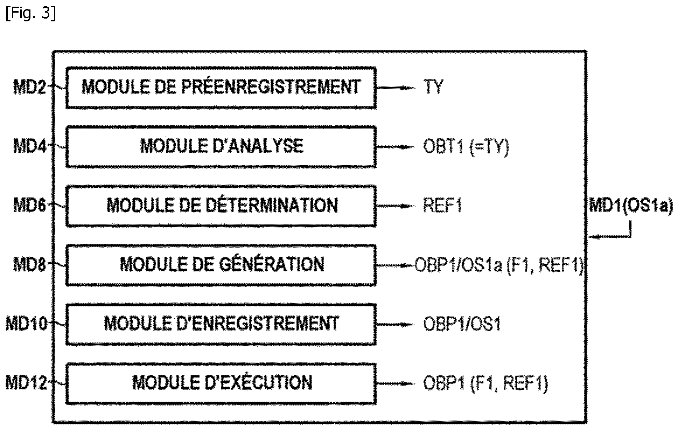

La **figure 3** représente selon un mode de réalisation particulier des modules mis en œuvre par le module de partage MD1 compris dans le système d'exploitation OS1a du dispositif DV1a (**figure 2**), à savoir : un module d'analyse MD4, un module de détermination MD6, un module de génération MD8, un module d'enregistrement MD10 et un module d'exécution MD12, ainsi qu'éventuellement un module de pré-enregistrement MD2. A noter que des modules analogues peuvent être mis en œuvre par le module de partage MD1 compris dans le système d'exploitation OS1 du dispositif DV1 représenté en **figure 1****.**

Plus spécifiquement, le module d'analyse MD4 est configuré pour réaliser une analyse du code interprétable orienté objet, de l'application fermée APP1, en cours d'exécution par le système d'exploitation OS1a. Au cours de cette analyse, le module d'analyse MD4 est en particulier configuré pour détecter l'instanciation par le système d'exploitation OS1a d'un premier objet OBT1 conforme à un type d'objet prédéfini TY (instanciation d'un objet d'intérêt). Comme indiqué par la suite, au moins un type d'objet prédéfini TY peut être défini à l'avance de sorte que le module d'analyse MD4 puisse déterminer, au cours de l'exécution de l'application APP1, si un nouvel objet instancié par le système d'exploitation OS1a est conforme à un type prédéfini TY.

Le module de partage MD1 peut ainsi comprendre un module de pré-enregistrement MD2 configuré pour : déterminer au moins un type d'objet prédéfini TY ; et pour enregistrer ledit au moins un type d'objet prédéfini TY dans une mémoire du premier dispositif DV1a (à savoir dans la mémoire non volatile MR1a dans cet exemple). Des modes de réalisation sans ce module de pré-enregistrement MD2 sont toutefois possibles.

Le module de détermination MD6 est configuré pour déterminer une référence d'objet REF1 pointant vers le premier objet OBT1 détecté par le module d'analyse MD4.

Le module de génération MD8 est configuré pour générer un nouvel objet OBP1, dit objet de partage, dans le contexte de l'application fermée APP1. Cet objet de partage OBP1 comprend au moins une fonction partagée (à savoir la fonction F1 dans les exemples qui suivent) et comprend un champ dans lequel est insérée la référence d'objet REF1.

Au sens de l'invention, on entend par « fonction partagée » une fonction mise en oeuvre par une application d'un premier contexte, cette fonction étant rendue accessible à une application d'un deuxième contexte, les premier et deuxième contextes étant distincts. Ces premier et deuxième contextes sont parfois nommés « contexte d'exécution ». Selon une implémentation particulière de l'invention, cette fonction partagée est accédée par l'application du deuxième contexte via un objet de partage. Le module d'enregistrement MD10 est configuré pour enregistrer (ou déclarer) l'objet de partage OBP1 auprès du système d'exploitation OS1a dans (ou comme étant inclus dans) une arborescence d'objets formée par le système d'exploitation OS1a en réponse au code interprétable de l'application fermée APP1. Le module de partage MD1 peut par exemple être configuré pour enregistrer auprès du système d'exploitation OS1a l'objet de partage OBP1 comme étant relié, directement ou indirectement, à une racine de persistance d'une arborescence d'objets (ou structure d'objets) formée par le système d'exploitation OS1a en réponse au code interprétable (bytecode Java Card) de l'application fermée APP1. L'objet de partage OBP1 peut en variante être enregistré auprès du système d'exploitation OS1 en tant que racine de persistance d'une arborescence d'objets (ou structure d'objets) formée par le système d'exploitation OS1a en réponse au code interprétable (bytecode Java Card) de l'application fermée APP1.

Le module d'exécution MD12 est configuré pour exécuter l'objet de partage OBP1 causant l'implémentation d'une interface de partage de sorte à fournir l'accès d'au moins une dite fonction partagée (à savoir la fonction F1 dans les exemples qui suivent) à une deuxième application, dite application cliente, se trouvant dans un contexte autre que l'application fermée.

La configuration et le fonctionnement des modules MD2-MD12 définis ci-avant apparaîtront plus précisément dans les exemples de réalisation décrits ci-après. A noter que les modules MD2-MD12 tels que représentés en **figure 3** ne représentent qu'un exemple de mise en œuvre non limitatif de l'invention.

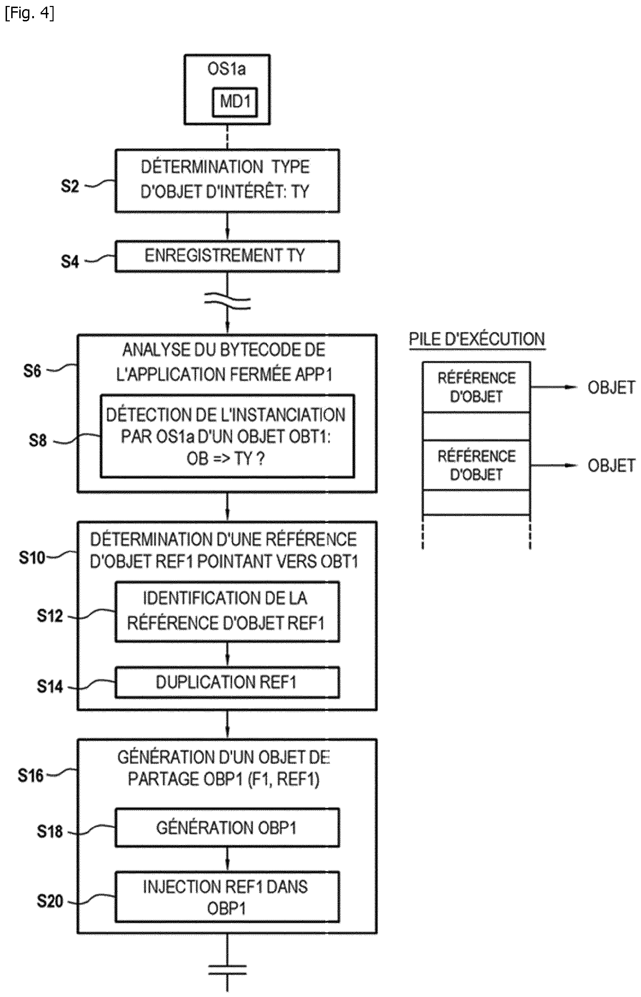

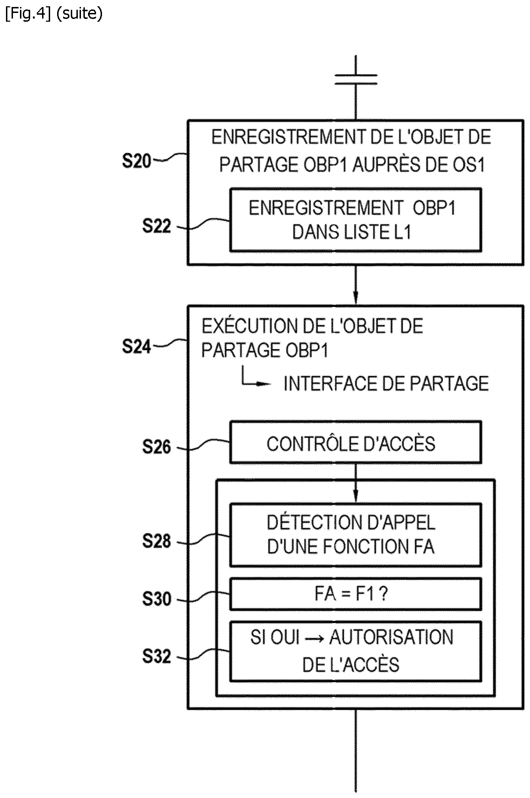

Des exemples de réalisation mis en œuvre par le système SY1 représenté en **figures 2** et **3** sont à présent décrits en référence aux figures 4 à 6**.** On considère ainsi que le premier dispositif DV1a (et plus particulièrement le module de partage MD1 du système d'exploitation OS1a) met en œuvre le procédé de mise en partage selon un mode de réalisation particulier de l'invention en exécutant le programme d'ordinateur PG1a. Le premier dispositif DV1a et le deuxième dispositif DV2 coopèrent en outre ensemble pour permettre le partage d'une fonction F1 de l'application fermée APP1 auprès de l'application cliente APP2.

On notera toutefois que l'invention s'applique de façon analogue au dispositif DV1 représenté en **figure 1** qui peut réaliser en tant que système le procédé de mise en partage de l'invention.

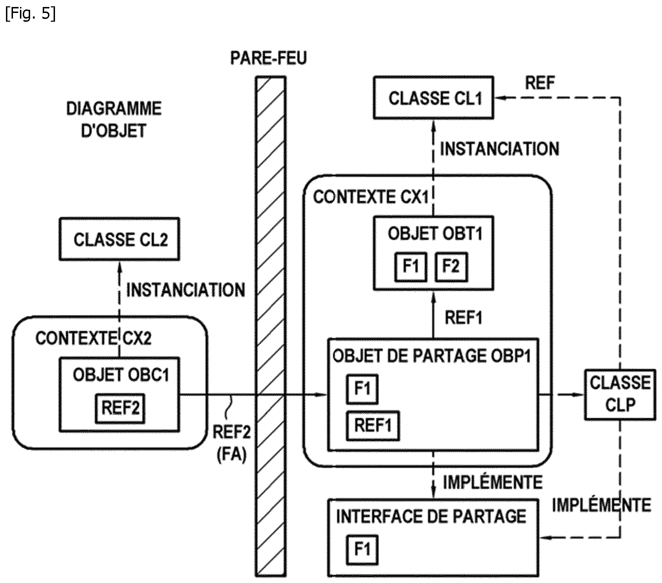

La **figure 5** est un diagramme d'objet représentant le déroulement du procédé de partage de l'invention dans le mode de réalisation considéré.

Comme déjà décrit, on suppose que l'application fermée APP1 comprend deux fonctions F1 et F2 et que l'on souhaite mettre en partage la fonction F1 de sorte que l'application cliente APP2, se trouvant dans un contexte d'application autre de l'application fermée, puisse appeler cette fonction F1.

Au cours d'une étape de détermination S2 (**figure 4**), le module de partage MD1 détermine au moins un type d'objet prédéfini TY. Le module de partage MD1 enregistre (S4) ensuite le ou les types d'objet prédéfini(s) TY dans une mémoire du dispositif DV1a, par exemple dans la mémoire non volatile MR1a. Chaque type prédéfini TY correspond à un type d'objet d'intérêt que le module de partage MD1 tente de détecter dans l'étape d'analyse S6 qui suit. Ces étapes S2 et S4 peuvent être réalisées lors d'une phase de personnalisation du dispositif DV1a. Ces étapes préliminaires S2 et S4 sont toutefois facultatives. Le module de partage MD1 peut éventuellement obtenir depuis l'extérieur le ou les types d'objet prédéfini(s) TY au cours de l'exécution du procédé de mise en partage.

Au cours d'une étape d'analyse S6 **(****figure 4****),** le module de partage MD1 analyse le bytecode (c'est-à-dire le code interprétable orienté objet) de l'application fermée APP1 tandis que ladite application fermée APP1 est en cours d'exécution par le système d'exploitation OS1a. Comme déjà indiqué, il s'agit de bytecode Java Card. Au cours de cette analyse S6, le module de partage MD1 détecte (S8) ainsi l'instanciation par le système d'exploitation OS1a d'un premier objet OBT1 dit « objet d'intérêt », c'est-à-dire un objet correspondant à un type d'objet prédéfini TY.

Pour ce faire, le module de partage MD1 surveille chaque objet - noté généralement OB - qui est instancié par le système d'exploitation OS1a au cours de l'exécution de l'application fermée APP1. Plus particulièrement, le module d'analyse MD1 peut analyser le code interprétable orienté objet (Java Card) de l'application fermée APP1 en cours d'exécution pour déterminer, pour chaque objet OB instancié par le système d'exploitation OS1a, si ledit objet instancié correspond à un dit type d'objet prédéfini TY.

On suppose dans cet exemple que le premier objet OBT1 instancié par le système d'exploitation OS1a au cours de l'exécution de l'application fermée APP1 est inclus dans un contexte (au sens langage orienté objet) noté CX1 (**figure 5**)**.** De manière générale, CX1 désigne le contexte de l'application fermée APP1 en cours d'exécution.

A noter qu'un type d'objet prédéfini TY peut couvrir une famille de sous-types d'objet respectant ledit type d'objet prédéfini TY. Autrement dit, un type d'objet prédéfini TY peut couvrir une famille de sous-types d'objet qui héritent chacun du type d'objet prédéfini TY de la famille. Selon un exemple particulier, un nouvel objet OB instancié par le système d'exploitation OS1a est détecté (S8) par le module de partage MD1 comme correspondant à un type d'objet prédéfini TY si l'une parmi ces deux conditions est remplie :
- le type de l'objet instancié OB est identique à un type d'objet prédéfini TY ; et
- le type de l'objet instancié OB hérite d'un type d'objet prédéfini TY.

L'analyse S6 est possible car le module de partage MD1 fait partie intégrante du système d'exploitation OS1a et peut analyser chaque nouvel objet OB instancié au cours de l'exécution de l'application APP1. Lorsqu'un nouvel objet OB est instancié, le système d'exploitation OS1a ajoute la référence de l'objet sur la pile d'exécution (comme illustré dans la pile d'exécution représentée en **figure 4**)**.** La pile d'exécution est une structure de données générée par le système d'exploitation OS1a au cours de l'exécution de l'application fermée APP1. Le principe d'une pile d'exécution est bien connu de l'homme du métier et ne sera donc pas décrit plus en détail dans ce document. Le module de partage MD1 analyse ainsi le bytecode au fur-et-à-mesure qu'il est exécuté par le système d'exploitation OS1a en surveillant les bytecodes de type « new » (nouveau) et les références d'objets empilées dans la pile d'exécution, afin de détecter l'instanciation de nouveaux objets dans le contexte de l'applet fermée APP1. Les opérandes du bytecode « new » lui permettent de détecter un (ou chaque) objet OB nouvellement instancié et de déterminer s'il correspond à un type d'objet prédéfini TY.

Selon un exemple particulier, au cours de l'analyse S6, le module de partage MD1 détecte des portions de code (bytecode) Java Card de l'application fermée APP1, exécutées par le système d'exploitation OS1a et causant l'instanciation d'un nouvel objet OB. Le module de partage MD1 détermine à partir d'opérandes définies dans ces portions de code, le type de chaque nouvel objet OB instancié par le système d'exploitation OS1a et détermine si le type de chaque nouvel objet OB instancié correspond à (est conforme à) un type d'objet prédéfini TY.

Plus précisément, lorsque l'application fermée APP1 est chargée dans la mémoire MR1a, un descripteur de classe est généralement aussi enregistré (comme décrit ci-après). Lorsqu'un objet OB est instancié par le système d'exploitation OS1a, cet objet OB comprend des informations (adresses, identifiants, ...) pointant notamment vers le descripteur de classe correspondant. Lorsque le module de partage MD1 détecte (S8) sur la pile d'exécution l'instanciation d'un nouvel objet OB, il consulte le descripteur de classe indiqué par l'objet OB détecté pour en déduire le contenu de l'objet. A partir des informations contenues dans le descripteur de classe, le module de partage M1 détermine si l'objet OB correspond à un (est un ou hérite d'un) type d'objet prédéfini TY.

Chaque nouvel objet OB ainsi instancié par le système d'exploitation OS1a constitue l'instanciation d'une classe dans le langage orienté objet considéré (à savoir Java Card dans le cas présent). Comme représenté en **figure 5****,** l'objet instancié OBT1 qui est détecté en S8 par le module de partage MD1 constitue ici l'instanciation d'une classe correspondante CL1. Cet objet OBT1 comprend dans cet exemple les fonctions F1 et F2 de l'application fermée APP1.

A noter que le ou les types d'objet prédéfinis TY sont choisis selon les fonctions ou les données que l'on souhaite mettre en partage. Dans le cas présent, on suppose que le module de partage MD1 détecte donc l'instanciation d'un premier objet d'intérêt OBT1 dont le type est conforme à un type prédéfini TY. Ce type TY a été prédéfini car il correspond à la fonction F1 que l'on souhaite mettre en partage lors de l'exécution de l'application fermée APP1.

Au cours d'une étape de détermination S10 (f**igure 4**), le module de partage MD1 détermine ensuite une référence d'objet REF1 pointant vers le premier objet OBT1 détecté en S8.

Pour ce faire, le module de partage MD1 peut par exemple identifier (S12) une référence d'objet - notée REF1 - empilée dans la pile d'exécution par le système d'exploitation OS1a au cours de l'exécution du code interprétable (Java Card) de l'application fermée APP1, cette référence d'objet REF1 pointant vers le premier objet OBT1 détecté lors de l'analyse S8. Cette identification S12 peut être réalisée lors de l'analyse S6 précédemment décrite. Le module de partage MD1 duplique (S14) ensuite cette référence d'objet REF1 en vue de l'insérer dans un champ d'un objet de partage comme décrit ci-après (étape S16). Autrement dit, la détermination S10 revient dans cet exemple de réalisation à copier (ou dupliquer) la référence d'objet REF1 pointant vers le premier objet OBT1 détecté en S6.

La référence d'objet REF1 comprend par exemple une adresse ou un identifiant pointant vers le premier objet OBT1. Comme déjà indiqué, lorsqu'un nouvel objet OB (type « new ») est instancié par le système d'exploitation OS1a, ce dernier empile (ajoute) la référence d'objet correspondante sur la pile d'exécution. Le module de partage MD1 duplique ensuite la référence d'objet REF1 lors de l'étape de détermination S10 de sorte à pouvoir l'utiliser lors de l'étape de génération S16 à venir. Cette copie de la référence d'objet REF1 peut être stockée provisoirement dans une mémoire du dispositif DV1a (par exemple dans la mémoire volatile 24 ou dans la mémoire non volatile MR1a) afin d'être utilisée lors de l'étape de génération S16. A noter que lorsqu'il duplique (S14) cette référence REF1, le système d'exploitation OS1a n'a pas besoin d'ajouter cette copie de référence sur la pile d'exécution (il n'est ainsi pas nécessaire de dépiler cette copie de référence).

Au cours d'une étape de génération S16 (**figures 4-5**), le module de partage MD1 génère un nouvel objet OBP1 - dit objet de partage - dans le contexte CX1 de l'application fermée APP1, cet objet de partage OBP1 comprenant au moins une fonction partagée (à savoir la fonction F1 dans cet exemple) et comprenant un champ dans lequel est insérée (ou injecté) la référence d'objet REF1 déterminé en 510.

Autrement dit, l'objet de partage OBP1 comprend au moins une fonction parmi la ou les fonctions du premier objet OBT1 vers lequel pointe l'objet de partage OBP1. Cet objet de partage OBP1 peut comprendre une pluralité de fonctions du premier objet OBT1 que l'on souhaite mettre en partage. Par souci de simplicité, on considère par la suite que l'objet de partage OBP1 est configuré pour ne mettre en partage que la fonction F1 du premier objet OBT1. Cette fonction F1 est dite partagée car l'objet de partage OBP1 est configuré pour fournir l'accès de cette fonction F1, par exemple à l'application cliente APP2 comme décrit ci-après. La nature et le nombre de fonctions du premier objet OBT1 qui sont mises en partage par l'objet de partage OBP1 peuvent être adaptés par l'homme du métier au cas par cas.

A noter que le champ dans lequel la référence d'objet REF1 est injectée constitue un membre de l'objet de partage OBP1.

On considère dans cet exemple que l'objet de partage OBP1 constitue l'instanciation d'une classe notée CLP (**figure 5**).

Selon un exemple particulier, l'objet de partage OBP1 généré par le module de partage MD1 en S16 n'est pas défini dans le code interprétable de l'application fermée APP1. C'est le module de partage MD1 qui est configuré pour instancier ce nouvel objet de partage OBP1 dans le contexte CX1 de l'application fermée APP1 alors même que l'application fermée APP1 n'est pas codée (configurée) pour causer une telle instanciation. Le module de partage MD1 génère ainsi l'objet de partage OBP1 sans qu'un bytecode correspondant de l'applet fermée APP1 soit exécuté. La génération de l'objet de partage OBP1 est donc décorrélée (indépendant) du code interprétable orienté objet de l'applet fermée APP1.

L'objet de partage OBP1 ainsi généré en S16 est un objet implémentant une interface de partage configuré pour mettre en partage la fonction F1 référencée par la référence d'objet REF1. Dans l'exemple considéré ici, l'objet de partage OBP1 est un objet d'interface SIO (ou objet d'interface) de type « Shareable » conforme au standard Java Card (**figure 5**).

Selon un exemple particulier, la génération S16 de l'objet de partage OBP1 comprend :
- une génération S18 au cours de laquelle l'objet de partage OBP1 est généré dans le contexte CX1 de l'application fermée APP1 ; et
- une injection S20 au cours de laquelle la référence d'objet REF1 pointant vers le premier objet OBT1 est enregistrée dans le champ de l'objet de partage OBP1.

A noter que dans cet exemple l'objet de partage OBP1 ainsi généré pointe vers l'unique objet instancié OBT1 détecté lors de l'analyse S6. Des variantes sont toutefois possibles dans lesquelles une pluralité de premiers objets OBT1 instanciés par le système d'exploitation OS1a sont détectés en S6. Dans ce cas, un objet de partage OBP1 dédié peut être généré pour chaque objet instancié OBT1 détecté en S6, cet objet de partage OBP1 comprenant une référence d'objet pointant vers ledit objet OBT1 correspondant. En variante, une pluralité de références d'objets peut être injectée dans un même objet de partage OBP1 de sorte à ce que ce dernier pointe vers une pluralité d'objets OBT1 correspondants.

Au cours d'une étape d'enregistrement S20 (**figure 4**), le module de partage MD1 enregistre auprès du système d'exploitation OS1a l'objet de partage OBP1 généré en S16 dans une arborescence d'objets (ou structure d'objets) formée par le système d'exploitation OS1a en réponse au code interprétable (bytecode Java Card) de l'application fermée APP1.

Plus particulièrement, lors de l'étape d'enregistrement S20, le module de partage MD1 peut enregistrer auprès du système d'exploitation OS1a l'objet de partage OBP1 généré en S16 comme étant relié, directement ou indirectement, à une racine de persistance d'une arborescence d'objets (ou structure d'objets) formée par le système d'exploitation OS1a en réponse au code interprétable (bytecode Java Card) de l'application fermée APP1. Autrement dit, l'objet de partage OBP1 peut être enregistré (ou déclaré) auprès du système d'exploitation OS1a comme étant connecté, au travers d'une arborescence d'objets formée par le système d'exploitation OS1a en réponse au (en exécutant le) code interprétable, à une racine de persistance de ladite arborescence. Cette connexion peut être directe (l'objet de partage OBP1 est un objet adjacent à la racine de persistance dans l'arborescence d'objets) ou indirecte (l'objet de partage OBP1 est connecté à la racine de persistance au travers d'au moins un objet intermédiaire de l'arborescence). L'objet de partage OBP1 peut également être enregistré (S20) auprès du système d'exploitation OS1a en tant qu'objet de persistance d'une arborescence d'objets (ou structure d'objets) formée par le système d'exploitation OS1a en réponse au code interprétable (bytecode Java Card) de l'application APP1.

Au cours de cette étape d'enregistrement S20, le module de partage MD1 enregistre (étape S22) par exemple l'objet de partage OBP1 dans une liste d'objet qui est pointée directement ou indirectement par une racine de persistance. Dans ce cas, la liste comprenant l'objet de partage OBP1 est reliée au travers de l'arborescence d'objets à une racine de persistance (de façon directe ou indirecte). Cette liste d'objet peut prendre la forme d'une structure de données quelconque. Selon un exemple particulier, cette liste est instanciée comme objet de racine de persistance dans l'arborescence d'objets.

Comme le comprend l'homme du métier, l'arborescence d'objets mentionnée ci-dessus est générée dynamiquement par le système d'exploitation OS1a lors de l'exécution de l'application fermée APP1, à partir de chaque référence d'objet, comprise dans les objets OB instanciés au cours de l'exécution du bytecode, et qui pointe vers un autre objet OB. Dans cet exemple, cette arborescence d'objets est enregistrée dans une mémoire du dispositif DV1a (par exemple dans la mémoire volatile 24 ou dans la mémoire non volatile MR1a).

Ainsi, cette arborescence d'objets est formée par divers objets interconnectés ensemble. Les objets de cette arborescence sont reliés entre eux par des références d'objet comprises dans certains objets, chaque référence pointant vers un unique autre objet. Ces objets interconnectés forment collectivement l'arborescence (ou structure) d'objets dont la ou les racines de persistance constituent la base. Une arborescence d'objets se ramifie ainsi à partir d'au moins un objet racine, dit racine de persistance, constituant la base de l'arborescence. Les ramifications d'objet de l'arborescence s'étendent depuis la ou les racines de persistance, dont le nombre et la nature peuvent varier selon le cas.

De façon connue, des mécanismes (ou outils) de collecte (dits « Garbage collector » en anglais) sont généralement prévus pour supprimer dans l'arborescence certains objets inutiles du système d'exploitation afin de libérer de l'espace mémoire. Un risque existe ainsi que le système d'exploitation OS1a exécutant ce mécanisme de collecte supprime l'objet de partage OBP1 généré par le module de partage MD1 puisque cet objet de partage OBP1 est a priori inutile pour l'application fermée APP1. C'est pourquoi, une fois généré, le module de partage MD1 enregistre (étape S20) cet objet de partage OBP1 auprès du système d'exploitation OS1a de sorte que cet objet de partage soit inclus dans l'arborescence d'objet (de sorte que cet objet de partage soit pointé directement ou indirectement par une racine de persistance, ou éventuellement qu'il constitue lui-même une racine de persistance), ce qui permet d'éviter la suppression de cet objet de partage OBP1 lors d'un processus de collecte. La suppression prématurée de cet objet de partage OBP1 risquerait d'empêcher la mise en partage de la fonction F1 au moment opportun. Grâce à cette étape S20 d'enregistrement, un partage de la fonction F1 peut être réalisé de façon fiable et efficace.

Au cours d'une étape d'exécution S24 (**figure 4**), le module de partage MD1 exécute l'objet de partage OBP1 causant ainsi l'implémentation d'une interface de partage de sorte à fournir l'accès de la fonction F1 à l'application client APP2.

Dans cet exemple, l'application cliente APP2 est exécutée par un autre système d'exploitation OS2 dans un dispositif distinct DV2. En variante, le deuxième système d'exploitation OS2 peut être réalisé dans le premier dispositif DV1a, voire même un unique système d'exploitation OS1 peut être configuré pour exécuter les applications APP1 et APP2 dans un unique dispositif DV1 (comme représenté en **figure 1**)**.**

Lors de cette exécution S24, le module de partage MD1 exécute ainsi le code d'exécution associé à l'objet de partage OBP1 pour mettre en œuvre l'interface de partage assurant le partage de la fonction F1 du premier objet OBT1. Le module de partage MD1 peut en particulier contrôler l'accès, au travers d'un pare-feu (firewall) JavaCard entre le contexte CX1 de l'application fermée APP1 et le contexte - noté CX2 - de l'application cliente APP2, de sorte à ne partager une fonction appelée par l'application cliente APP2 que si cette fonction appelée est définie en tant que fonction partagée dans l'objet de partage OBP1.

L'objet de partage OBP1 joue ainsi le rôle de proxy ou d'interface de partage, comme défini dans le standard Java Card. L'objet de partage OBP1 contrôle (ou filtre) les appels de fonction provenant d'applications clientes hors du contexte CX1 de sorte qu'un objet client OBC1 situé hors du contexte CX1 de l'applet fermée APP1 ne puisse pas appeler une fonction (telle que F2 par exemple) qui n'est pas reconnue par l'objet de partage OBP1 comme étant partagée au travers du pare-feu (**figure 5**)**.**

De manière générale, un objet de partage OBP1 généré par le module de partage MD1 ne peut partager avec une application cliente APP2 qu'une ou des fonctions d'un objet, de l'application fermée APP1, qui correspondent à un type d'objet prédéfini TY (comme détecté en S8).

Selon un exemple particulier, le module de partage MD1 contrôle (étape S26), au cours de l'exécution S24, l'accès au travers d'un firewall JavaCard entre le contexte CX1 de l'application fermée APP1 et le contexte CX2 de l'application cliente APP2, de sorte à refuser à l'application cliente APP2 l'accès à toute fonction d'un objet instancié, de l'application fermée APP1, qui n'est pas comprise (ou définie comme acceptée) dans l'objet de partage OBP1.

Plus particulièrement, l'étape d'exécution S26 peut comprendre (**figures 4-5**) :
- une détection S28 qu'un objet client OBC1 instancié par l'application cliente APP2 appelle au moins une fonction FA du premier objet OBT1 au travers du firewall JavaCard ;
- une détermination S30 de savoir si ladite au moins une fonction appelée FA correspond à au moins une dite fonction partagée F1 telle que définie par l'objet de partage OBP1 ; et
- dans l'affirmative, l'autorisation S32 de l'accès de l'objet client OBC1, au travers du firewall JavaCard, à ladite au moins une fonction FA appelée.

L'applet fermée APP1 et l'applet cliente APP2 sont dans des contextes Java Card différents CX1, CX2 (**figure 5**) afin de sécuriser l'environnement d'exécution de l'application fermée APP1. Un pare-feu Java Card isole ainsi les deux contextes CX1, CX2 de sorte que l'application cliente APP2, située hors du contexte CX1 de l'application APP1, ne puisse pas appeler la fonction F1 sans l'objet de partage OBP1 agissant en tant qu'interface de partage. En l'absence d'une telle isolation entre contextes, une fonction cliente APP2 pourrait accéder librement à toutes les fonctions de l'application fermée APP1 ce qui présenterait un risque sécuritaire important.

La présente invention met ainsi en œuvre un mécanisme inter-applet permettant le partage sécurisé, avec une application cliente, de fonctions (ou méthodes) d'une application Java Card, ou plus généralement d'une quelconque application (ou applet) cible définie en langage interprété orienté objet. Une application cliente située hors du contexte de l'application fermée bénéficie ainsi d'un accès limité et sécurisé à une ou des fonctions de l'application fermée, selon les droits d'accès définis dans l'objet de partage.

Ce partage de fonction est possible sans induire de vulnérabilité dans le code de l'application fermée. Une application malveillante (malware ou autre) ne pourra ainsi avoir qu'un accès très limité aux fonctions de l'application fermée, ce qui permet de limiter les risques de sécurité. Dans l'exemple décrit ci-avant, une application cliente ne peut appeler que la fonction F1 autorisée en partage par l'objet de partage OBP1. Ainsi, la fonction F2 reste interdite d'accès pour une application cliente externe au contexte de l'application fermée.

En outre, l'appel de la fonction partagée est possible sans qu'il soit nécessaire que l'application fermée comprenne dans son bytecode une interface de partage (type « Shareable »). On peut ainsi donner l'accès à des fonctions d'une application cible sans altérer son code d'exécution, ce qui n'est d'ailleurs pas possible dans le cas où cette application cible est une application fermée.

Les **figures 5-6** représentent, selon un mode de réalisation particulier, la mise en œuvre du procédé de partage de l'invention par le premier dispositif DV1a représenté en **figure 2****.** Plus généralement, le système SY1 représenté en **figure 2** met en œuvre un procédé de traitement conforme à un mode de réalisation particulier de l'invention. Au cours de ce procédé de traitement, le premier dispositif DV1a et le deuxième dispositif DV2 coopèrent ensemble pour permettre l'accès, à l'application cliente APP2, d'une fonction F1 de l'application fermée APP1.

On notera toutefois que l'invention peut être mise en œuvre de façon analogue au dispositif DV1 représenté en **figure 1** qui peut réaliser, en tant que système de l'invention, le procédé de traitement de l'invention. Dans cette variante, c'est le système d'exploitation OS1 qui réalise les étapes effectuées par les systèmes d'exploitation OS1a et OS2 dans l'exemple décrit ci-après.

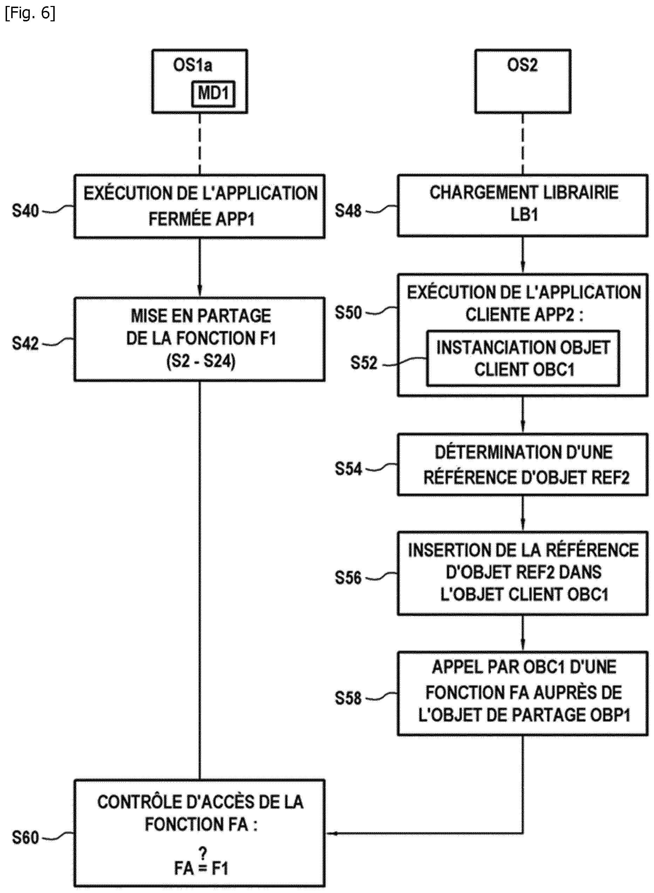

Au cours d'une étape S40 (**figure 6**), le système d'exploitation OS1a du premier dispositif DV1a exécute l'application fermée APP1 (de type Java Card dans cet exemple). Cette exécution peut être déclenchée en réponse à tout évènement approprié. Pour ce faire, l'application fermée APP1 a été précédemment chargée dans la mémoire MR1a du dispositif DV1a.

Alors que l'exécution S40 de l'application fermée APP1 est en cours, le module de partage MD1 du système d'exploitation OS1a réalise en S42 le procédé de mise en partage de l'invention en exécutant les étapes S2 à S24 telles que précédemment décrites en référence notamment à la **figure 4****.** Pour ce faire, le premier dispositif DV1a exécute le programme d'ordinateur PG1a (**figure 2**) pour mettre en œuvre le module de partage MD1.

On suppose à présent que l'objet de partage OBP1 a été généré (S16), qu'il a été enregistré (S20) dans une arborescence d'objets (par exemple comme étant relié à une racine de persistance ou comme étant une racine de persistance) et qu'il est exécuté (S24) par le module de partage MD1 causant l'implémentation d'une interface de partage comme déjà décrit en référence à la **figure 4****.**

D'autre part, on suppose qu'une librairie Java Card notée LB1 est préalablement chargée (S48) dans la mémoire MR2 du deuxième dispositif DV2 de sorte à ce que cette librairie LB1 soit connue et accessible par le deuxième système d'exploitation OS2. La librairie LB1 comprend des informations de classe (descripteur de classe) caractérisant des classes d'objet, dont la classe CLP de l'objet de partage OBP1 précédemment décrit. Autrement dit, les informations de classe sont des métadonnées qui définissent notamment la classe CLP dont l'objet de partage OBP1 est une instanciation.

Au cours d'une étape S50 d'exécution, le deuxième système d'exploitation OS2 exécute l'application cliente APP2 de type Java Card dans un contexte CX2 différent du contexte CX1 de l'application fermée APP1 (**figures 5-6**)**.** Pour ce faire, l'application cliente APP2 est aussi préalablement chargée dans la mémoire MR2 du deuxième dispositif DV2.

Au cours de l'exécution S50 de l'application cliente APP2, le deuxième système d'exploitation OS2 instancie (génère) en S52 un objet OBC1, dit objet client, de l'application cliente APP2 dans un contexte CX2 distinct du contexte CX1 de l'application fermée APP1. Cet objet client OBC1 constitue l'instanciation d'une classe correspondante CL2 (**figure 5**)**.** Un pare-feu Java Card isole ainsi les contextes CX1 et CX2.

Le deuxième système d'exploitation OS2 détermine (S54, **figure 6**) ensuite une référence d'objet REF2 pointant vers l'objet de partage OBP1 qui a été généré par le premier système d'exploitation OS1 dans le contexte CX1. Pour ce faire, le deuxième système d'exploitation OS2 consulte la librairie LB1 précédemment chargée et détermine, à partir de cette librairie LB1 (et en particulier des informations de classe), la référence d'objet REF2 pointant vers l'objet de partage OBP1.

Le deuxième système d'exploitation OS2 peut en outre enregistrer provisoirement la référence d'objet REF2 dans une mémoire du deuxième dispositif DV2 (dans la mémoire volatile 34 ou dans la mémoire non volatile MR2), bien que des modes de réalisation sans cette étape d'enregistrement soient possibles.

Au cours d'une étape d'injection S56 (**figures 5-6**), le deuxième système d'exploitation OS2 insère (ou injecte) la référence d'objet REF2 dans un champ de l'objet client OBC1. L'objet client OBC1 est ainsi capable, à partir de la référence d'objet REF2, d'accéder à la fonction F1, du premier objet OBT1, autorisée en partage par l'objet de partage OBP1.

Au cours d'une étape d'appel S58 (**figures 5-6**), l'objet client OBC1 de l'application cliente APP2 appelle une fonction FA du premier objet OBT1 auprès de l'objet de partage OBP1 implémentant une interface de partage au travers du pare-feu Java Card. Cet appel résulte du deuxième système d'exploitation OS2 exécutant l'objet client OBC1.

Le premier système d'exploitation OS1a exécute alors l'objet de partage OBP1 causant l'implémentation d'une interface de partage de sorte à contrôler l'accès à l'application fermée APP1, comme déjà décrit ci-avant en référence à l'étape S24 (**figure 4**).

L'objet client OBC1 n'obtient ainsi l'accès à la fonction FA appelée que si cette dernière est définie en tant que fonction partagée dans l'objet de partage OBP1 (c'est-à-dire que si la fonction appelée est ou coïncide avec la fonction F1 dans cet exemple).

Pour ce faire, l'objet de partage OBP1 vérifie par exemple en S60 si la fonction appelée FA est (ou correspond à) une fonction définie en tant que fonction de partage dans l'objet de partage OBP1. Dans l'affirmative, l'objet de partage OBP1 autorise l'accès à la fonction FA appelée. Dans le cas contraire, l'accès est refusé. Dans le cas présent, on suppose par exemple que l'objet client OBC1 appelle la fonction F1 qui est détectée comme étant une fonction de partage par l'objet de partage OBP1 (F1 = FA). Aussi, l'objet de partage OBP1 (S60) autorise l'accès au travers du pare-feu de l'objet client OBC1 à la fonction F1 appelée.

Avant l'étape d'appel S58, une étape d'authentification mutuelle peut éventuellement être réalisée entre l'objet de partage OBP1 et l'objet client OBC1 pour davantage sécuriser le procédé de traitement. L'appel S58 n'est alors réalisé que si cette authentification est passée avec succès.

Comme déjà décrit, le procédé de traitement de l'invention peut également être réalisé par le système SY1 représenté en **figure 2****,** dans un cas particulier où les dispositifs DV1a et DV2 forment un seul et même dispositif, de sorte que les systèmes d'exploitation OS1a et OS2 coopèrent ensemble au sein du même dispositif pour mettre en œuvre l'invention. En variante, ces deux systèmes d'exploitation forment un seul et même système d'exploitation mettant en œuvre l'invention (par exemple comme représente en **figure 1**)**.**

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin mettre en œuvre un mode de réalisation répondant à un besoin bien particulier, conformément aux revendications ci-après.

## Revendications

1. Procédé de mise en partage, mis en œuvre dans un premier dispositif électronique (DV1) comprenant une première application (APP1), dite application fermée, de type Java Card et un système d'exploitation (OS1 ; OS1a) apte à exécuter l'application fermée, le système d'exploitation comprenant un module de partage (MD1),
le procédé comprenant les étapes suivantes réalisées par le module de partage :
- analyse (S6) du code interprétable orienté objet, de l'application fermée, en cours d'exécution par le système d'exploitation, ladite analyse comprenant détection (S8) de l'instanciation par le système d'exploitation d'un premier objet correspondant à un type d'objet prédéfini ;
- détermination (S10) d'une référence d'objet (REF1) pointant vers ledit premier objet ;
- génération (S16) d'un nouvel objet dit objet de partage dans le contexte de l'application fermée, ledit objet de partage comprenant au moins une fonction partagée et comprenant un champ dans lequel est insérée ladite référence d'objet ;
- enregistrement (S20) de l'objet de partage auprès du système d'exploitation dans une arborescence d'objets formée par le système d'exploitation en réponse au code interprétable ; et
- exécution (S24) de l'objet de partage causant l'implémentation d'une interface de partage de sorte à fournir l'accès d'au moins une dite fonction partagée à une deuxième application, dite application cliente, de type Java Card se trouvant dans un contexte autre que l'application fermée.

2. Procédé selon la revendication 1 comprenant, avant l'analyse du
code interprétable orienté objet :
- détermination d'au moins un type d'objet prédéfini ; et
- enregistrement dudit au moins un type d'objet prédéfini dans une mémoire du premier dispositif électronique ;
dans lequel ladite analyse comprend:
- analyse du code interprétable orienté objet de l'application fermée en cours d'exécution pour déterminer, pour chaque objet instancié par le système d'exploitation, si ledit objet instancié correspond à un dit type d'objet prédéfini.

3. Procédé selon la revendication 1 ou 2, dans lequel l'analyse comprend :
- détection de portions de code interprétable orienté objet de l'application fermée, exécutées par le système d'exploitation, causant l'instanciation d'un nouvel objet ;
- détermination, à partir d'opérandes définies dans lesdites portions de code, du type de chaque nouvel objet instancié par le système d'exploitation ; et
- détermination de savoir si le type de chaque nouvel objet instancié correspond à un type d'objet prédéfini.

4. Procédé selon l'une quelconque des revendications 1 à 3, dans lequel ladite détermination d'une référence d'objet pointant vers ledit au moins un premier objet comprend :
- identification d'une référence d'objet empilée dans une pile d'exécution par le système d'exploitation au cours de l'exécution du code interprétable de l'application fermée, ladite référence d'objet pointant vers ledit premier objet détecté lors de l'analyse ; et
- duplication de ladite référence d'objet en vue de l'insérer dans ledit champ de l'objet de partage.

5. Procédé selon l'une quelconque des revendications 1 à 4, dans lequel l'objet de partage généré par le module de partage n'est pas défini dans le code interprétable de l'application fermée.

6. Procédé selon l'une quelconque des revendications 1 à 5, ladite génération de l'objet de partage comprenant :
- génération au cours de laquelle l'objet de partage est généré dans le contexte de l'application fermée ; et
- injection au cours de laquelle la référence d'objet pointant vers ledit premier objet est enregistrée dans ledit champ de l'objet de partage.

7. Procédé selon l'une quelconque des revendications 1 à 6, dans lequel ledit enregistrement comprend :
- enregistrement de l'objet de partage dans une liste d'objet qui est pointée directement ou indirectement par une racine de persistance.

8. Procédé selon l'une quelconque des revendications 1 à 7, dans lequel ladite exécution comprend :
- contrôle de l'accès, au travers d'un firewall Java Card entre le contexte de l'application fermée et le contexte de l'application cliente, de sorte à ne partager une fonction appelée par l'application cliente que si ladite fonction appelée est définie en tant que fonction partagée dans l'objet de partage.

9. Procédé selon l'une quelconque des revendications 1 à 8, dans lequel ladite exécution comprend :
- détection qu'un objet client instancié par l'application cliente appelle au moins une fonction du premier objet au travers du firewall Java Card ;
- détermination de savoir si ladite au moins une fonction appelée correspond à au moins une dite fonction partagée telle que définie par l'objet de partage ; et
- dans l'affirmative, autorisation de l'accès de l'objet client, au travers du firewall Java Card, à ladite au moins une fonction appelée.

10. Procédé selon l'une quelconque des revendications 1 à 9, dans lequel l'application cliente est comprise dans le premier dispositif électronique, ou dans lequel l'application cliente est comprise dans un deuxième dispositif électronique avec lequel coopère le premier dispositif électronique.

11. Procédé de traitement, mis en œuvre dans un système comprenant :
- un premier dispositif électronique (DV1a) comprenant une première application (APP1), dite application fermée, de type Java Card et un premier système d'exploitation (OS1a) apte à exécuter l'application fermée, le système d'exploitation comprenant un module de partage ; et
- un deuxième dispositif électronique (DV2) comprenant une deuxième application (APP2), dite application cliente, de type Java Card et un deuxième système d'exploitation (OS2) apte à exécuter l'application cliente ;
le procédé comprenant :
- exécution par le premier système d'exploitation de l'application fermée ; et
- exécution, par le module de partage du premier système d'exploitation, d'un procédé de mise en partage tel que défini selon l'une quelconque des revendications 1 à 10 ;
le procédé comprenant en outre les étapes suivantes réalisées par le deuxième système d'exploitation :
- exécution de l'application cliente, dans un contexte autre que l'application fermée, au cours de laquelle un objet dit objet client est instancié ;
- détermination d'une deuxième référence d'objet (REF2) pointant vers l'objet de partage ;
- insertion de la deuxième référence d'objet dans un champ dudit objet client ; et
- appel, par ledit objet client, d'une fonction du premier objet auprès de l'objet de partage implémentant une interface de partage au travers d'un pare-feu Java Card, ledit objet client n'obtenant l'accès à ladite fonction appelée que si ladite fonction appelée est définie en tant que fonction partagée dans l'objet de partage.

12. Procédé selon la revendication 11, dans lequel les premier et
deuxième dispositifs électroniques sont des dispositifs distincts,
ou
dans lequel les premier et deuxième dispositifs électroniques forment un seul et même dispositif de sorte que les premier et deuxième systèmes d'exploitation forment un seul et même système d'exploitation.

13. Procédé selon la revendication 11 ou 12 comprenant, avant l'exécution de l'application fermée par le premier système d'exploitation du premier dispositif électronique :
- chargement dans une mémoire du deuxième dispositif électronique d'une librairie JavaCard comprenant des informations de classe définissant la classe de l'objet de partage ;
dans lequel le deuxième système d'exploitation détermine la référence d'objet pointant vers l'objet de partage à partir des informations de classe.

14. Premier dispositif électronique (DV1 ; DV1a) comprenant une première application, dite application fermée, de type Java Card et un système d'exploitation (OS1a) apte à exécuter l'application fermée, le système d'exploitation comprenant un module de partage,
le module de partage comprenant :
- un module d'analyse configuré pour réaliser une analyse du code interprétable orienté objet, de l'application fermée, en cours d'exécution par le système d'exploitation ;
le module d'analyse étant configuré pour détecter, au cours de ladite analyse, l'instanciation par le système d'exploitation d'un premier objet conforme à un type d'objet prédéfini ;
- un module de détermination configuré pour déterminer une référence d'objet pointant vers ledit premier objet ;
- un module de génération configuré pour générer un nouvel objet dit objet de partage dans le contexte de l'application fermée, ledit objet de partage comprenant au moins une fonction partagée et comprenant un champ dans lequel est insérée ladite référence d'objet ;
- un module d'enregistrement configuré pour enregistrer l'objet de partage auprès du système d'exploitation dans une arborescence d'objets formée par le système d'exploitation en réponse au code interprétable ; et
- un module d'exécution configuré pour exécuter l'objet de partage causant l'implémentation d'une interface de partage de sorte à fournir l'accès d'au moins une dite fonction partagée à une deuxième application, dite application cliente, de type Java Card se trouvant dans un contexte autre que l'application fermée.

15. Système comprenant :
- un premier dispositif électronique (DV1a) selon la revendication 14 ; et
- un deuxième dispositif électronique (DV2) comprenant une deuxième application (APP2), dite application cliente, de type Java Card et un deuxième système d'exploitation (OS2) apte à exécuter l'application cliente ;
dans lequel le premier système d'exploitation est configuré pour exécuter l'application fermée,
dans lequel le deuxième système d'exploitation comprend :
- un module d'exécution configuré pour exécuter l'application cliente, dans un contexte autre que l'application fermée, de sorte à instancier un objet dit objet client au cours de l'exécution de l'application cliente ;
- un module de détermination configuré pour déterminer une deuxième référence d'objet pointant vers l'objet de partage ;
- un module d'insertion configuré pour insérer la deuxième référence d'objet dans un champ dudit objet client ; et
- un module d'appel configuré pour que ledit objet client appelle une fonction du premier objet auprès de l'objet de partage implémentant une interface de partage au travers d'un pare-feu Java Card, ledit objet client n'obtenant l'accès à ladite fonction appelée que si ladite fonction appelée est définie en tant que fonction partagée dans l'objet de partage.

## Patentansprüche

1. Verfahren zum Teilen, das in einer ersten elektronischen Vorrichtung (DV1) durchgeführt wird, die ein erstes Applet (APP1), geschlossenes Applet genannt, vom Typ Java Card und ein zum Ausführen des geschlossenen Applets geeignetes Betriebssystem (OS1; OS1a) umfasst, wobei das Betriebssystem ein Teilungsmodul (MD1) umfasst, wobei das Verfahren die folgenden von dem Teilungsmodul ausgeführten Schritte umfasst:
- Analyse (S6) des objektorientierten interpretierbaren Codes des geschlossenen Applets, der gerade von dem Betriebssystem ausgeführt wird, wobei die Analyse das Detektieren (S8) der Instanziierung eines einem vorgegebenen Objekttyp entsprechenden ersten Objekts durch das Betriebssystem umfasst;
- Bestimmen (S10) einer Objektreferenz (REF1), die auf das erste Objekt zeigt;
- Erzeugen (S16) eines neuen Objekts, Teilungsobjekt genannt, in dem Kontext des geschlossenen Applets, wobei das Teilungsobjekt mindestens eine geteilte Funktion umfasst und ein Feld umfasst, in das die Objektreferenz eingefügt ist;
- Speichern (S20) des Teilungsobjekts bei dem Betriebssystem in einer Objektbaumstruktur, die durch das Betriebssystem als Antwort auf den interpretierbaren Code gebildet wird; und
- Ausführen (S24) des Teilungsobjekts, was die Implementierung einer Teilungsschnittstelle verursacht, so dass der Zugriff mindestens einer solchen geteilten Funktion auf ein zweites Applet, Client-Applet genannt, vom Typ Java Card bereitgestellt wird, das sich in einem anderen Kontext als das geschlossene Applet befindet.

2. Verfahren nach Anspruch 1, umfassend, vor der Analyse des objektorientierten interpretierbaren Codes:
- Bestimmen mindestens eines vorgegebenen Objekttyps; und
- Speichern des mindestens einen vorgegebenen Objekttyps in einem Speicher der ersten elektronischen Vorrichtung;
wobei die Analyse umfasst:
- Analyse des objektorientierten interpretierbaren Codes des geschlossenen Applets, der gerade ausgeführt wird, um für jedes von dem Betriebssystem instanziierte Objekt zu bestimmen, ob das instanziierte Objekt einem solchen vorgegebenen Objekttyp entspricht.

3. Verfahren nach Anspruch 1 oder 2, wobei die Analyse umfasst:
- Detektieren von Abschnitten von objektorientiertem interpretierbarem Code des geschlossenen Applets, die von dem Betriebssystem ausgeführt werden, was die Instanziierung eines neuen Objekts verursacht;
- Bestimmen, ausgehend von in den Codeabschnitten definierten Operanden, des Typs jedes von dem Betriebssystem instanziierten neuen Objekts; und
- Bestimmen, ob der Typ jedes instanziierten neuen Objekts einem vorgegebenen Objekttyp entspricht.

4. Verfahren nach einem der Ansprüche 1 bis 3, wobei das Bestimmen einer Objektreferenz, die auf das mindestens eine erste Objekt zeigt, umfasst:
- Identifizieren einer Objektreferenz, die in einem Ausführungsstapel durch das Betriebssystem während der Ausführung des interpretierbaren Codes des geschlossenen Applets gestapelt wird, wobei die Objektreferenz auf das bei der Analyse detektierte erste Objekt zeigt; und
- Duplizieren der Objektreferenz, um sie in das Feld des Teilungsobjekts einzufügen.

5. Verfahren nach einem der Ansprüche 1 bis 4, wobei das von dem Teilungsmodul erzeugte Teilungsobjekt in dem interpretierbaren Code des geschlossenen Applets nicht definiert ist.

6. Verfahren nach einem der Ansprüche 1 bis 5, wobei das Erzeugen des Teilungsobjekts umfasst:
- Erzeugen, während dessen das Teilungsobjekt in dem Kontext des geschlossenen Applets erzeugt wird; und
- Einführen, während dessen die auf das erste Objekt zeigende Objektreferenz in dem Feld des Teilungsobjekts gespeichert wird.

7. Verfahren nach einem der Ansprüche 1 bis 6, wobei das Speichern umfasst:
- Speichern des Teilungsobjekts in einer Objektliste, auf die direkt oder indirekt durch eine Persistenzwurzel gezeigt wird.

8. Verfahren nach einem der Ansprüche 1 bis 7, wobei das Ausführen umfasst:
- Kontrolle des Zugriffs, über eine Java Card Firewall zwischen dem Kontext des geschlossenen Applets und dem Kontext des Client-Applets, so dass eine von dem Client-Applet aufgerufene Funktion nur geteilt wird, wenn die aufgerufene Funktion in dem Teilungsobjekt als geteilte Funktion definiert ist.

9. Verfahren nach einem der Ansprüche 1 bis 8, wobei das Ausführen umfasst:
- Detektieren, dass ein von dem Client-Applet instanziiertes Client-Objekt mindestens eine Funktion des ersten Objekts über die Java Card Firewall aufruft;
- Bestimmen, ob die mindestens eine aufgerufene Funktion mindestens einer solchen geteilten Funktion wie durch das Teilungsobjekt definiert entspricht; und
- falls ja, Genehmigen des Zugriffs des Client-Objekts über die Java Card Firewall auf die mindestens eine aufgerufene Funktion.

10. Verfahren nach einem der Ansprüche 1 bis 9, wobei das Client-Applet in der ersten elektronischen Vorrichtung enthalten ist, oder
wobei das Client-Applet in einer zweiten elektronischen Vorrichtung enthalten ist, mit der die erste elektronische Vorrichtung zusammenwirkt.

11. Verfahren zur Verarbeitung, das in einem System durchgeführt wird, welches umfasst:
- eine erste elektronische Vorrichtung (DV1a), die ein erstes Applet (APP1), geschlossenes Applet genannt, vom Typ Java Card und ein zum Ausführen des geschlossenen Applets geeignetes erstes Betriebssystem (OS1a) umfasst, wobei das Betriebssystem ein Teilungsmodul umfasst; und
- eine zweite elektronische Vorrichtung (DV2), die ein zweites Applet (APP2), Client-Applet genannt, vom Typ Java Card und ein zum Ausführen des Client-Applets geeignetes zweites Betriebssystem (OS2) umfasst;
wobei das Verfahren umfasst:
- Ausführen des geschlossenen Applets durch das erste Betriebssystem; und
- Ausführen eines Verfahrens zum Teilen wie in einem der Ansprüche 1 bis 10 definiert durch das Teilungsmodul des ersten Betriebssystems;
wobei das Verfahren ferner die folgenden von dem zweiten Betriebssystem ausgeführten Schritte umfasst:
- Ausführen des Client-Applets in einem anderen Kontext als das geschlossene Applet, während dessen ein als Client-Objekt bezeichnetes Objekt instanziiert wird;
- Bestimmen einer zweiten Objektreferenz (REF2), die auf das Teilungsobjekt zeigt;
- Einfügen der zweiten Objektreferenz in ein Feld des Client-Objekts; und
- Aufrufen, durch das Client-Objekt, einer Funktion des ersten Objekts bei dem Teilungsobjekt, wobei eine Teilungsschnittstelle über eine Java Card Firewall implementiert wird, wobei das Client-Objekt den Zugriff auf die aufgerufene Funktion nur erhält, wenn die aufgerufene Funktion als geteilte Funktion in dem Teilungsobjekt definiert ist.

12. Verfahren nach Anspruch 11, wobei die erste und die zweite elektronische Vorrichtung getrennte Vorrichtungen sind,
oder
wobei die erste und die zweite elektronische Vorrichtung ein und dieselbe Vorrichtung bilden, so dass das erste und das zweite Betriebssystem ein und dasselbe Betriebssystem bilden.

13. Verfahren nach Anspruch 11 oder 12, umfassend vor dem Ausführen des geschlossenen Applets durch das erste Betriebssystem der ersten elektronischen Vorrichtung:
- Laden in einen Speicher der zweiten elektronischen Vorrichtung einer JavaCard-Bibliothek, die Klasseninformationen umfasst, welche die Klasse des Teilungsobjekts definieren;
wobei das zweite Betriebssystem die auf das Teilungsobjekt zeigende Objektreferenz ausgehend von den Klasseninformationen bestimmt.

14. Erste elektronische Vorrichtung (DV1; DV1a), die ein erstes Applet, geschlossenes Applet genannt, vom Typ Java Card und ein zum Ausführen des geschlossenen Applets geeignetes Betriebssystem (OS1a) umfasst, wobei das Betriebssystem ein Teilungsmodul umfasst,
wobei das Teilungsmodul umfasst:
- ein Analysemodul, das dazu ausgestaltet ist, eine Analyse des objektorientierten interpretierbaren Codes des geschlossenen Applets, der von dem Betriebssystem gerade ausgeführt wird, auszuführen;
wobei das Analysemodul ferner dazu ausgestaltet ist, während der Analyse die Instanziierung eines einem vorgegebenen Objekttyp entsprechenden ersten Objekts durch das Betriebssystem zu detektieren;
- ein Bestimmungsmodul, das dazu ausgestaltet ist, eine auf das erste Objekt zeigende Objektreferenz zu bestimmen;
- ein Erzeugungsmodul, das dazu ausgestaltet ist, ein neues Objekt, Teilungsobjekt genannt, in dem Kontext des geschlossenen Applets zu erzeugen, wobei das Teilungsobjekt mindestens eine geteilte Funktion umfasst und ein Feld umfasst, in das die Objektreferenz eingefügt ist;
- ein Speichermodul, das dazu ausgestaltet ist, das Teilungsobjekt bei dem Betriebssystem in einer Objektbaumstruktur zu speichern, die durch das Betriebssystem als Antwort auf den interpretierbaren Code gebildet wird; und
- ein Ausführungsmodul, das dazu ausgestaltet ist, das Teilungsobjekt auszuführen, was die Implementierung einer Teilungsschnittstelle verursacht, so dass der Zugriff mindestens einer solchen geteilten Funktion auf ein zweites Applet, Client-Applet genannt, vom Typ Java Card bereitgestellt wird, das sich in einem anderen Kontext als das geschlossene Applet befindet.

15. System, umfassend:
- eine erste elektronische Vorrichtung (DV1a) nach Anspruch 14; und
- eine zweite elektronische Vorrichtung (DV2), die ein zweites Applet (APP2), Client-Applet genannt, vom Typ Java Card und ein zum Ausführen des Client-Applets geeignetes zweites Betriebssystem (OS2) umfasst;
wobei das erste Betriebssystem dazu ausgestaltet ist, das geschlossene Applet auszuführen,
wobei das zweite Betriebssystem umfasst:
- ein Ausführungsmodul, das dazu ausgestaltet ist, das Client-Applet in einem anderen Kontext als das geschlossene Applet auszuführen, so dass ein Objekt, Client-Objekt genannt, während der Ausführung des Client-Applets instanziiert wird;
- ein Bestimmungsmodul, das dazu ausgestaltet ist, eine auf das Teilungsobjekt zeigende zweite Objektreferenz zu bestimmen;
- ein Einfügungsmodul, das dazu ausgestaltet ist, die zweite Objektreferenz in ein Feld des Client-Objekts einzufügen; und
- ein Aufrufmodul, das dazu ausgestaltet ist, dass das Client-Objekt eine Funktion des ersten Objekts bei dem Teilungsobjekt aufruft, wobei eine Teilungsschnittstelle über eine Java Card Firewall implementiert wird, wobei das Client-Objekt den Zugriff auf die aufgerufene Funktion nur erhält, wenn die aufgerufene Funktion als geteilte Funktion in dem Teilungsobjekt definiert ist.

## Claims

1. Sharing method, implemented in a first electronic device (DV1) comprising a first application (APP1), called closed application, of Java Card type and an operating system (OS1; OS1a) capable of executing the closed application, the operating system comprising a sharing module (MD1),
the method comprising the following steps, carried out by the sharing module:
- analysing (S6) object-oriented interpretable code, of the closed application, currently being executed by the operating system, said analysis comprising detecting (S8) that the operating system has instantiated a first object corresponding to a predefined object type;
- determining (S10) an object reference (REF1) pointing to said first object;
- generating (S16) a new object, called sharing object, in the context of the closed application, said sharing object comprising at least one shared function and comprising a field in which said object reference is inserted;
- registering (S20) the sharing object with the operating system in an object tree formed by the operating system in response to the interpretable code; and
- executing (S24) the sharing object, causing implementation of a sharing interface so as to provide access to at least one said shared function to a second application, called client application, of Java Card type located in a context other than the closed application.

2. Method according to Claim 1, comprising, prior to analysing the object-oriented interpretable code:
- determining at least one predefined object type; and
- recording said at least one predefined object type in a memory of the first electronic device;
wherein said analysis comprises:
- analysing the object-oriented interpretable code of the closed application currently being executed in order to determine, for each object instantiated by the operating system, whether said instantiated object corresponds to a said predefined object type.

3. Method according to Claim 1 or 2, wherein the analysis comprises:
- detecting object-oriented interpretable code portions of the closed application that are executed by the operating system, causing instantiation of a new object;
- determining, based on operands defined in said code portions, the type of each new object instantiated by the operating system; and
- determining whether the type of each instantiated new object corresponds to a predefined object type.

4. Method according to any one of Claims 1 to 3, wherein said determination of an object reference pointing to said at least one first object comprises:
- identifying an object reference stacked in an execution stack by the operating system during execution of the interpretable code of the closed application, said object reference pointing to said first object detected during the analysis; and
- duplicating said object reference with a view to inserting it in said field of the sharing object.

5. Method according to any one of Claims 1 to 4, wherein the sharing object generated by the sharing module is not defined in the interpretable code of the closed application.

6. Method according to any one of Claims 1 to 5, said generation of the sharing object comprising:
- generation, during which the sharing object is generated in the context of the closed application; and
- injection, during which the object reference pointing to said first object is recorded in said field of the sharing object.

7. Method according to any one of Claims 1 to 6, wherein said recording comprises:
- recording the sharing object in an object list that is pointed to directly or indirectly by a persistence root.

8. Method according to any one of Claims 1 to 7, wherein said execution comprises:
- controlling access through a Java Card firewall between the context of the closed application and the context of the client application, so as to share a function called by the client application only if said called function is defined as a shared function in the sharing object.

9. Method according to any one of Claims 1 to 8, wherein said execution comprises:
- detecting that a client object instantiated by the client application calls at least one function of the first object through the Java Card firewall;
- determining whether said at least one called function corresponds to at least one said shared function as defined by the sharing object; and
- if so, authorizing access for the client object, through the Java Card firewall, to said at least one called function.

10. Method according to any one of Claims 1 to 9, wherein the client application is contained within the first electronic device, or
wherein the client application is contained within a second electronic device with which the first electronic device cooperates.

11. Processing method, implemented in a system comprising:
- a first electronic device (DV1a) comprising a first application (APP1), called closed application, of Java Card type and a first operating system (OS1a) capable of executing the closed application, the operating system comprising a sharing module; and
- a second electronic device (DV2) comprising a second application (APP2), called client application, of Java Card type and a second operating system (OS2) capable of executing the client application;
the method comprising:
- the first operating system executing the closed application; and
- the sharing module of the first operating system executing a sharing method as defined according to any one of Claims 1 to 10;
the method furthermore comprising the following steps, carried out by the second operating system:
- executing the client application, in a context other than the closed application, during which an object, called client object, is instantiated;
- determining a second object reference (REF2) pointing to the sharing object;
- inserting the second object reference in a field of said client object; and
- said client object calling a function of the first object from the sharing object implementing a sharing interface through a Java Card firewall, said client object obtaining access to said called function only if said called function is defined as a shared function in the sharing object.

12. Method according to Claim 11, wherein the first and second electronic devices are separate devices,
or
wherein the first and second electronic devices form a single device, such that the first and second operating systems form a single operating system.

13. Method according to Claim 11 or 12, comprising, prior to the first operating system of the first electronic device executing the closed application:
- loading, into a memory of the second electronic device, a Java Card library comprising class information defining the class of the sharing object;
wherein the second operating system determines the object reference pointing to the sharing object based on the class information.

14. First electronic device (DV1; DV1a) comprising a first application, called closed application, of Java Card type and an operating system (OS1a) capable of executing the closed application, the operating system comprising a sharing module,
the sharing module comprising:
- an analysis module configured to analyse object-oriented interpretable code, of the closed application, currently being executed by the operating system;
the analysis module being configured to detect, during said analysis, that the operating system has instantiated a first object conforming to a predefined object type;
- a determination module configured to determine an object reference pointing to said first object;
- a generation module configured to generate a new object, called sharing object, in the context of the closed application, said sharing object comprising at least one shared function and comprising a field in which said object reference is inserted;
- a registration module configured to register the sharing object with the operating system in an object tree formed by the operating system in response to the interpretable code; and
- an execution module configured to execute the sharing object, causing implementation of a sharing interface so as to provide access to at least one said shared function to a second application, called client application, of Java Card type located in a context other than the closed application.

15. System comprising:
- a first electronic device (DV1a) according to Claim 14; and
- a second electronic device (DV2) comprising a second application (APP2), called client application, of Java Card type and a second operating system (OS2) capable of executing the client application;
wherein the first operating system is configured to execute the closed application,
wherein the second operating system comprises:
- an execution module configured to execute the client application, in a context other than the closed application, so as to instantiate an object, called client object, during the execution of the client application;
- a determination module configured to determine a second object reference pointing to the sharing object;
- an insertion module configured to insert the second object reference in a field of said client object; and
- a call module configured such that said client object calls a function of the first object from the sharing object implementing a sharing interface through a Java Card firewall, said client object obtaining access to said called function only if said called function is defined as a shared function in the sharing object.
